(19) Europäisches Patentamt
European Patent Office
Office européen des brevets

(11) **EP 1 471 628 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*H02P 6/00* *(2006.01)*       *H02P 6/24* *(2006.01)*

(21) Anmeldenummer: **04017162.1**

(22) Anmeldetag: **21.10.1999**

(54) **Elektronisch kommutierter Motor, und Verfahren zum Betreiben eines solchen**

Electronically commutated motor and method to drive the same

Moteur à commutation électronique et procédé de commande de celui-ci

(84) Benannte Vertragsstaaten:
**AT BE CH CY DE DK ES FI FR GB GR IE IT LI LU MC NL PT SE**

(30) Priorität: **09.11.1998 DE 19851615**

(43) Veröffentlichungstag der Anmeldung:
**27.10.2004 Patentblatt 2004/44**

(62) Dokumentnummer(n) der früheren Anmeldung(en) nach Art. 76 EPÜ:
**99950767.6 / 1 129 519**

(73) Patentinhaber: **ebm-papst St. Georgen GmbH & Co. KG**
**78112 St. Georgen (DE)**

(72) Erfinder:
• **Hahn, Alexander**
**78253 Eigeltingen-Heudorf (DE)**
• **Rappenecker, Hermann**
**78147 Vöhrenbach (DE)**

(74) Vertreter: **Raible, Tobias et al**
**Raible & Raible**
**Schoderstrasse 10**
**70192 Stuttgart (DE)**

(56) Entgegenhaltungen:
**EP-B- 0 521 709**

• **PATENT ABSTRACTS OF JAPAN Bd. 018, Nr. 221 (E-1540), 20. April 1994 (1994-04-20) & JP 06 014583 A (FUJITSU GENERAL LTD), 21. Januar 1994 (1994-01-21)**

EP 1 471 628 B1

**Beschreibung**

Die Erfindung betrifft einen elektronisch kommutierten Motor mit einem permanentmagnetischen Rotor und einem Stator, und sie betrifft ein Verfahren zum Betreiben eines solchen Motors.

Aus der DE 3 629 186 kennt man einen elektronisch kommutierten Motor mit einem Rotor und einem Stator, mit einer Statorwicklungsanordnung, welche über eine Vollbrückenschaltung mit Strom aus einer Gleichstromquelle speisbar ist, welche Vollbrückenschaltung in jedem Brückenzweig einen oberen MOSFET-Transistor, der mit der einen Leitung der Gleichstromquelle verbunden ist, und einen unteren Transistor, der mit der anderen Leitung der Gleichstromquelle verbunden ist, aufweist, mit einer Kommutierungsanordnung zum Kommutieren dieser Transistoren, welche Kommutierungsanordnung dazu ausgebildet ist, in Abhängigkeit zumindest von der Stellung des Rotors bei einem ersten Brückenzweig nur einen Transistor einzuschalten und bei einem zweiten Brückenzweig den oberen und den unteren Transistor alternierend einzuschalten. Bei diesem bekannten Motor wird nach Erreichen des gewünschten Stromes der Antriebsstrom durch Sperren des einen der im zweiten Brückenzweig befindlichen Transistoren unterbrochen, und praktisch gleichzeitig wird der andere Transistor des zweiten Brückenzweigs eingeschaltet, so dass dort der Strom in einem Kurzschlusskreis fließt und von außen nicht gemessen werden kann. Anschließend wird dieser andere Transistor wieder ausgeschaltet, und der eine Transistor wird wieder eingeschaltet, wodurch erneut ein Antriebsstrom fließt, der gemessen werden kann.

Anders als bekannte Motoren hat dieser bekannte Motor die Eigenschaft, dass bei ihm nicht nur ein Antriebsstrom fließen kann, sondern, je nach Betriebsbedingungen auch ein Bremsstrom in einer zum Antriebsstrom entgegen gesetzten Richtung. Wird dieser Bremsstrom zu hoch, so wird durch ihn ein derart hohes Magnetfeld des Stators erzeugt, dass ein permanentmagnetischer Rotor entmagnetisiert werden kann.

Aus der EP-B1-0521709 kennt man einen elektronisch kommutierten Motor, der über eine Vollbrückenschaltung (mit IGBTs) mit Strom versorgt wird. Für die oberen Brückentransistoren sind Speicherkondensatoren vorgesehen, welche Energie für die Steuerung eines zugeordneten IGBTs speichern. Diese Speicherkondensatoren werden über die unteren Transistoren durch Stromimpulse nachgeladen.

Aus der US-A-5773941 kennt man einen ferngesteuerten Linearantrieb. Dieser hat eine eigene Treiberschaltung, eine eigene Kommutierungssteuerung, und Hallsensoren zur Erfassung der Stellung des Linearantriebs. Ferner hat er einen Spannungsregler und eine Pufferbatterie. Eine Zweidrahtverbindung dient als Gleichstrom-Zwischenkreis und zur Fernsteuerung. Den Steuerelementen, also der Pufferbatterie, wird Energie über die Zweidrahtverbindung mittels Hochfrequenz zugeführt. Die Spannung am Gleichstrom-Zwischenkreis kann über ein PWM-Signal verändert werden, damit bei Start des Motors die Gleichspannung am Zwischenkreis rampenförmig erhöht werden kann. Beim Bremsen wird dieser Zwischenkreis über ein Relais kurzgeschlossen. Dazu muss vor dem Kurzschließen die Spannung am Zwischenkreis auf Null reduziert werden. Der Bremsstrom wird mittels eines Widerstands gemessen, und wenn dieser Strom zu hoch wird, wird der Strom in den Wicklungen des Motors unterbrochen.

Aus der JP-06/014583 A kennt man einen Motor, bei dem der Strom I, welcher in einer Statorwicklung fließt, nach folgender Formel geschätzt wird

$$I = k(U/f)$$

Dabei ist U die Spannung an einer Statorwicklung, und f ist die Drehfrequenz des Motors, also ein drehzahlproporzionaler Wert.

Dieser geschätzte Strom I wird anschließend mit einem Grenzwert verglichen. Wenn der geschätzte Strom I zu hoch ist, wird die Spannung reduziert, welche der Statorwicklung zugeführt wird.

Bei dieser Formel ergibt sich für f=0, also Stillstand des Motors, ein geschätzter Strom $I = \infty$, was ersichtlich unzutreffend ist, da im Stillstand der Motorstrom durch den Innenwiderstand des Motors begrenzt wird.

Ein Motor erreicht bei einer bestimmten Betriebsspannung $U_E$ eine bestimmte Leerlaufdrehzahl, und wenn der Motor von außen so angetrieben wird, dass er schneller läuft als diese Leerlaufdrehzahl, arbeitet er als Generator und liefert dann einen negativen Strom. Aus der Formel $I=k(U/f)$ ergibt sich aber für alle Drehfrequenzen f ein positiver Strom, d. h. dieser Formel berücksichtigt überhaupt nicht die Beziehung zwischen induzierter Spannung $U_i$ und angelegter Spannung $U_E$, so dass mit ihr der Übergang vom motorischen zum generatorischen Betrieb nicht erkannt werden kann.

Es ist eine Aufgabe der Erfindung, einen neuen elektronisch kommutierten Motor, sowie ein Verfahren zum Betreiben eines solchen, bereit zu stellen.

Nach einem ersten Aspekt der Erfindung wird diese Aufgabe gelöst durch ein Verfahren gemäß Patentanspruch 1. Dieses Verfahren verwendet also ein synthetisches Motormodell in Verbindung mit der gemessenen Drehzahl. Dabei wird laufend geprüft, ob die dem Motor zugeführte Gleichspannung $U_E$ in einer vorgegebenen Relation zu der im Motor induzierten Spannung $U_i$, der sogenannten Gegen-EMK, steht.

Die zugeführte Gleichspannung ist bekannt, ebenso die Drehzahl des Motors. Die induzierte Spannung Ui ist zur Drehzahl n des Motors proportional und kann folglich berechnet werden, wenn die Drehzahl bekannt ist.

Wird die induzierte Spannung $U_i$ größer als die zugeführte Spannung $U_E$, so stellt sich ein negativer Wicklungsstrom ein, und der Motor bremst, da er jetzt als Generator arbeitet.

Wenn also die Relation von Ui und $U_E$ ergibt, dass diese Relation außerhalb einer vorgegebenen Grenze liegt, wird durch den Mikroprozessor das (im Anspruch 1 angegebene) Tastverhältnis entsprechend verändert, und hierdurch wird der Bremsstrom begrenzt, so dass z. B. eine Entmagnetisierung der Rotormagnete verhindert wird. Ein solches Verfahren eignet sich besonders gut dort, wo durch äußere Einflüsse eine gewünschte Drehzahl überschritten werden kann, wodurch der Motor automatisch in den Bremsbetrieb übergeht, und es wird sicher gestellt, dass bei einem solchen Bremsbetrieb vorgegebene Motorgrenzwerte nicht oder nicht wesentlich überschritten werden können.

Eine vorteilhafte Weiterbildung des Verfahrens gemäß Anspruch 1 erhält man durch den Gegenstand des Anspruchs 3. Auf diese Weise kann man durch entsprechende Ausgestaltung der Software, nämlich durch ein synthetisches (ggf. vereinfachtes) Modell des Motors erreichen, dass dieser in einem Bereich arbeitet, in dem er nicht durch Überlastung gefährdet ist. Z. B. könnte bei manchen Motortypen mit hoher spezifischer Leistung durch einen zu hohen Antriebs- oder Bremsstrom ein so hohes Magnetfeld des Stators erzeugt werden, dass der permanentmagnetische Rotor entmagnetisiert wird, und durch diese Weiterbildung kann das in sehr einfacher Weise verhindert werden, was die Betriebssicherheit entscheidend erhöht.

Eine andere Lösung der gestellten Aufgabe ergibt sich durch einen elektronisch kommutierten Motor gemäß Anspruch 7. Bei einem solchen Motor gelingt es, das PWM-Signal erst kurz vor der Ansteuerschaltung einzuschleusen, was die Schaltung extrem vereinfacht, wobei der Mikroprozessor trotzdem die volle Kontrolle über die Ansteuerschaltung behält, so dass er - unabhängig vom PWM-Signal - den oberen und den unteren Transistor des zugeordneten Brückenzweigs ansteuern kann (z. B. bei der Verwendung als Ladungspumpe), andererseits aber nach der Umschaltung des zweiten Ausgangs des Mikroprozessors in den vorgegebenen Schaltzustand die Steuerung dieses Brückenzweigs durch das PWM-Signal ermöglicht, z. B. zur Regelung eines Motorparameters.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    ein Übersichtsschaltbild einer ersten Ausführungsform eines erfindungsgemäßen elektronisch kommutierten Motors,

Fig. 2    eine Tabelle, welche die Ausgangssignale der Rotorstellungssensoren und in Abhängigkeit davon die Steuerung der Vollbrückenschaltung 78 der Fig. 1 darstellt,

Fig. 3    ein elektrisches Ersatzschaltbild, welches nur Teile der Vollbrückenschaltung 78 der Fig. 1 zeigt, um die Erfindung besser erläutern zu können,

Fig. 4A    bis 4F zeigen schematische Diagramme der in Fig. 3 auftretenden Spannungen, Ströme und Leistungen bei einer wechselseitigen Taktung,

Fig. 5    eine Strombegrenzungsanordnung zum Begrenzen des Antriebsstromes im Motor der Fig. 1,

Fig. 6    eine Strombegrenzungsanordnung zur Begrenzung des Bremsstromes beim Motor der Fig. 1,

Fig. 7    eine Darstellung, welche eine kombinierte Strombegrenzungsanordnung für die Begrenzung des Antriebsstromes und die Begrenzung des Bremsstromes bei einem Motor der Fig. 1 zeigt,

Fig. 8    ein Übersichtsschaltbild zur Erläuterung einer bevorzugten Ausführungsform eines erfindungsgemäßen Motors,

Fig. 9    eine Darstellung zur Erläuterung eines analogen PWM-Generators, wie er mit Vorteil beim Motor gemäß Fig. 8 verwendet werden kann,

Fig. 10A    und 10B Schaubilder zur Erläuterung von Fig. 9,

Fig. 11    eine Einzeldarstellung zur Erläuterung der Ansteuerung eines Brückenzweigs bei der Anordnung gemäß Fig. 8,

Fig. 12   eine Darstellung, welche die Ausgangssignale der Rotorstellungssensoren 111, 112, 113 gemäß Fig. 1 und ein kombiniertes Rotorsteilungssignal zeigt, weiches aus diesen Rotorstellungssignalen zusammengesetzt ist,

Fig. 13   ein Flußdiagramm, welches die Abläufe beim sogenannten Pumpen bei einem erfindungsgemäßen Motor zeigt,

Fig. 14A   und 14B Schaubilder zur Erläuterung der Wirkungsweise von Fig. 13,

Fig. 15   eine Prinzipdarstellung zur Erläuterung der Wirkungsweise einer digitalen Drehzahlregelanordnung, wie sie bei der vorliegenden Erfindung mit besonderem Vorteil Verwendung finden kann,

Fig. 16   ein Flußdiagramm zur Realisierung der Regelanordnung gemäß Fig. 15,

Fig. 17   eine stark vereinfachte Anordnung zur Erläuterung des Flußdiagramms der Fig. 16,

Fig. 18   eine Darstellung eines PWM-Signals und der hierbei auftretenden Signalformen und Zeiten,

Fig. 19   ein Motordiagramm zur Erläuterung des elektronisch kommutierten Motors nach den vorhergehenden Figuren,

Fig. 20   einen Schritt eines Flußdiagramms, der als Variante in der Regelanordnung aus Fig. 16 verwendet werden kann,

Fig. 21   ein Motordiagramm zur Erläuterung einer vereinfachten Strombegrenzung,

Fig. 22   einen Ausschnitt eines Flußdiagramms, der als Variante in der Regelanordnung in Fig. 16 verwendet werden kann und zur Realisierung von Fig. 21 dient,

Fig. 23   ein Flußdiagramm zur Erläuterung der Begrenzung der Betriebsspannung $U_B$ des Motors, die ihm über einen Gleichstrom-Zwischenkreis zugeführt wird,

Fig. 24   eine schematische Darstellung zur Erläuterung des Flußdiagramms der Fig. 23,

Fig. 25   einen Funktionsmanager, wie er bevorzugt bei einem erfindungsgemäßen Motor verwendet werden kann,

Fig. 26   eine Darstellung eines Steuerworts mit acht Bit, welche dazu dienen, in einem Funktionsmanager (Fig. 25) Prioritäten für den Ablauf von Vorgängen im erfindungsgemäßen Motor festzulegen,

Fig. 27   ein Motordiagramm zur Erläuterung einer sehr vorteilhaften Variante der Strombegrenzung,

Fig. 28   einen Schritt eines Flußdiagramms, der als Variante in der Regelanordnung aus Fig. 16 verwendet werden kann und zur Realisierung der Variante gamäß Fig. 27 dient,

Fig. 29   ein Flußdiagramm für eine Kommutierungsfunktion, die zur Kommutierung der Endstufe 78 dient,

Fig. 30   eine bevorzugte Variante der Anordnung gemäß Fig. 1, die mit einem synthetischen Motormodell arbeitet,

Fig. 31   ein elektrisches Ersatzschaltbild wie in Fig. 3, welches nur Teile der Vollbrückenschaltung 78 der Fig. 1 zeigt, und eine andere Art der Ansteuerung der Brücke betrifft, und

Fig. 32   eine Variante nach Fig. 8, wie sie zur Ansteuerung der Variante nach Fig. 31 benötigt wird.

**Motor**

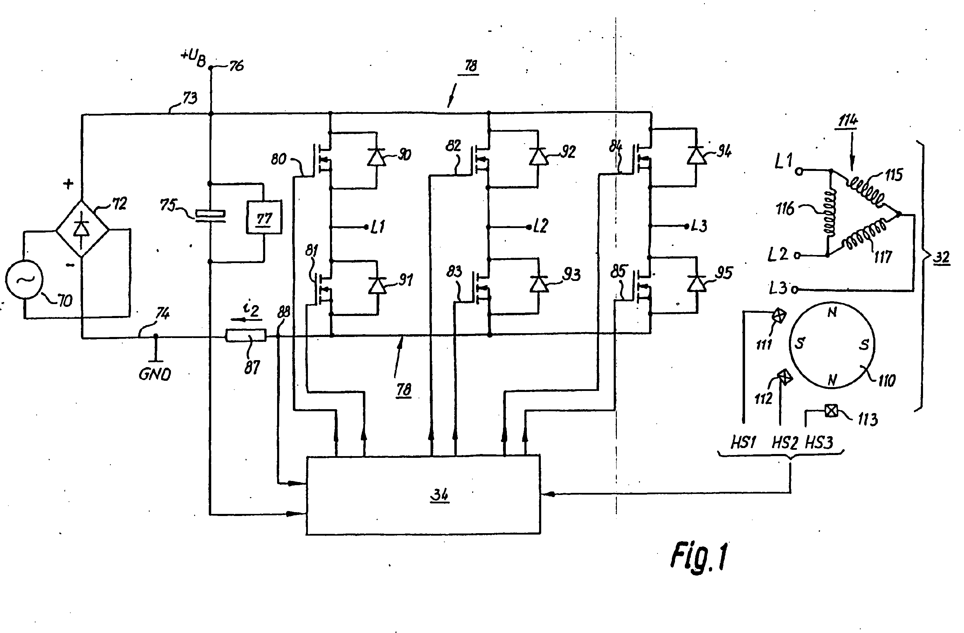

**Fig. 1** zeigt einen dreiphasigen elektronisch kommutierten Motor (ECM) 32 mit den Wicklungsanschlüssen L1, L2 und L3 und einer als Vollbrücke ausgebildeten Endstufe 78 mit drei Brückenzweigen.

Eine Wechselspannung aus einer Wechselspannungsquelle 70 wird in einem Gleichrichter 72 gleichgerichtet und einem Gleichstromzwischenkreis 73, 74 (DC link) zugeführt. Ein Kondensator 75 glättet die Gleichspannung $U_B$ am Zwischenkreis 73, 74, welche den einzelnen Brückenzweigen der Vollbrücke 78 zugeführt wird. Diese kann an einem Anschluß 76 gemessen werden. Als Leistungsschalter werden in diesem Ausführungsbeispiel sowohl für die oberen Leistungsschalter 80, 82 und 84 als auch für die unteren Leistungsschalter 81, 83 und 85 N-Kanal MOSFETs verwendet. Zu den Leistungsschaltern 80 bis 85 sind Freilaufdioden 90, 91, 92, 93, 94 und 95 antiparallelgeschaltet. Die Freilaufdioden 90 bis 95 sind üblicherweise in die zugehörigen N-Kanal MOSFETS integriert. Die Gleichspannung $U_B$ am Zwischenkreis 73, 74 wird auch Verbrauchern 77 zugeführt, z.B. elektronischen Komponenten des Motors 32.

Über die oberen Leistungsschalter 80, 82 und 84 kann der jeweilige Wicklungsanschluß L1, L2 bzw. L3 mit der Plusleitung 73 verbunden werden, und über die unteren Leistungsschalter 81, 83 und 85 kann der jeweilige Wicklungsanschluß L1, L2 bzw. L3 mit der negativen Leitung 74 verbunden werden.

Der Motor 32 weist eine zentrale Steuereinheit 34 auf. Diese schaltet die oberen und unteren Leistungsschalter 80 bis 85.

Ein Messwiderstand 87 dient dazu, den durch die unteren Brückentransistoren 81, 83 und 85 fließenden Strom $i_2$ anhand der Spannung zwischen einem Punkt 88 und Masse zu messen und einer Strombegrenzung in der zentralen Steuereinheit 34 zuzuführen. Bei der vorliegenden Schaltung kann dieser Strom $i_2$ in beiden Richtungen fließen: In der dargestellten Richtung, wenn der Motor 32 elektrische Leistung aufnimmt, und in der umgekehrten Richtung, wenn der Motor als Generator arbeitet und Leistung abgibt, die dann in den Kondensator 75 fließt.

Der Motor 32 weist einen permanentmagnetischen Rotor 110, einen Stator 114 und drei galvanomagnetische Rotorstellungssensoren 111, 112 und 113 auf. Als galvanomagnetische Rotorstellungssensoren können z.B. Hallsensoren benutzt werden.

Der Rotor 110 ist als vierpoliger Außenrotor dargestellt.

Die drei galvanomagnetischen Rotorstellungssensoren 111, 112 und 113 sind mit einem Winkelabstand von jeweils 120° el. voneinander um den Rotor 110 angeordnet und dienen zur Bestimmung der Lage des Rotors. So ist der Rotorstellungssensor 111 bei 0° el. (0° mech.), der Rotorstellungssensor 112 bei 120° el. (60° mech.) und der Rotorstellungssensor 113 bei 240° el. (120° mech.) angeordnet.

Der allgemeine Zusammenhang zwischen elektrischem Winkel $phi_{el}$ und mechanischem Winkel $phi_{mech}$ ist durch die Polzahl PZ des Rotors durch

$$phi_{el} = phi_{mech} * PZ/2 \qquad ... (1)$$

gegeben.

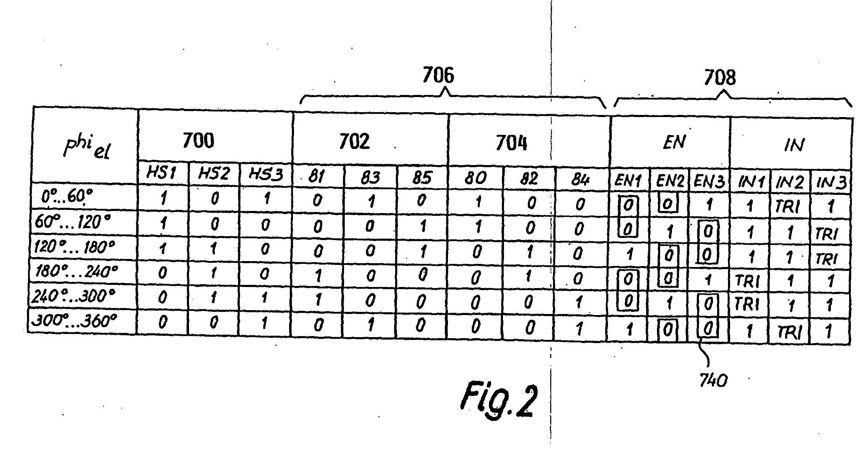

Der Rotorstellungssensor 111 liefert ein Hallsignal HS1, der Rotorstellungssensor 112 ein Hallsignal HS2 und der Rotorstellungssensor 113 ein Hallsignal HS3, vgl. Fig. 2. Die Hallsignale HS1, HS2 und HS3 werden der zentralen Steuervorrichtung 34 zugeführt, welche daraus die Stellung des Rotors und dessen Drehzahl n bestimmen kann.

Der Stator weist drei Statorwicklungen 115, 116 und 117 auf, welche in diesem Ausführungsbeispiel im Dreieck geschaltet sind. Die Statorwicklungen werden durch die Endstufe 78 über die Wicklunganschlüsse L1, L2 und L3 bestromt.

## Ansteuerlogik

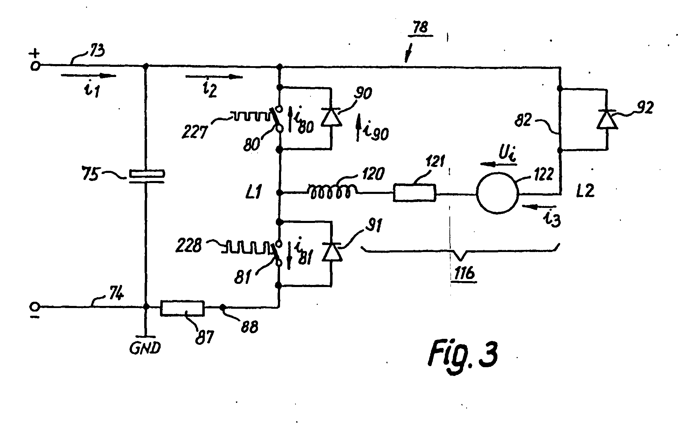

**Fig. 2** zeigt eine Tabelle, welche die Bestromung der oberen Leistungsschalter 80, 82 und 84 (Spalte 704) und die der unteren Leistungsschalter 81, 83 und 85 (Spalte 702) in Abhängigkeit der Hallsignale HS1, HS2 und HS3 (Spalte 700) der Rotorstellungssensoren 111, 112 und 113 für eine Laufrichtung des Motors angibt. Hierzu ist ebenfalls der Winkelbereich des elektrischen Winkels $phi_{el}$ angegeben. Die Werte in den Spalten der Leistungsschalter 80 bis 85 gelten für einen Motor ohne Taktung (Spalte 706), also ohne das Signal PWM2, die Spalten EN1, EN2, EN3 und IN1, IN2, IN3 gelten für einen Motor 32 mit wechselseitiger Taktung (Spalte 708), wie sie anhand von Fig. 3 beschrieben wird.

So haben z.B. die Hallsignale bei einer Position des Rotors 110 in dem Bereich 0° ... 60° el. die Werte HS1 = 1, HS2 = 0 und HS3 = 1. Daraus ergibt sich die Ansteuerung der Leistungsschalter 80 bis 85. Bei einer Ansteuerung ohne Taktung liegt der Wicklungsanschluß L1 über den Leistungsschalter 80 an der Plusleitung 73 (1 bei Schalter 80 in Fig. 2), der Wicklungsanschluß L2 über den Leistungsschalter 83 an der Minusleitung 74 (1 bei Schalter 83 in Fig. 2), und beim Wicklungsanschluß L3 sind beide Leistungsschalter 84 und 85 (jeweils 0 bei Schalter 84 und 85 in Fig. 2) offen, ebenso die Leistungsschalter 81 und 82.

Bei einer einfachen Taktung (siehe Fig. 3) bedeutet eine 1 bei einem der unteren Leistungsschalter 81, 83, 85, daß dieser durch ein PWM-Signal getaktet, also mit einem bestimmten Tastverhältnis aus- und eingeschaltet wird.

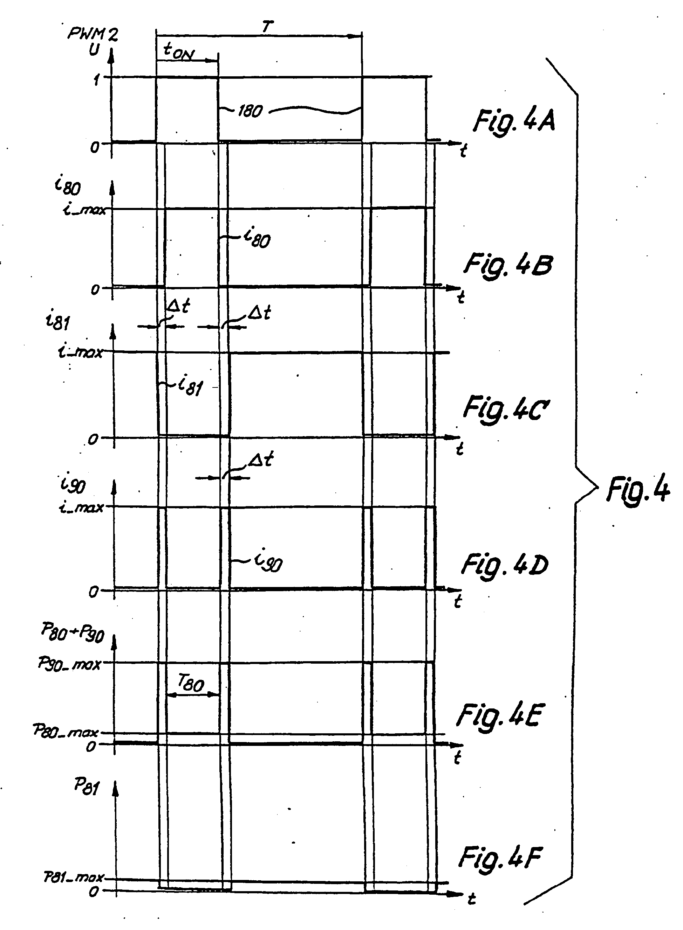

Bei einer wechselseitigen Taktung (siehe Fig. 3) bedeutet eine 1 bei einem unteren Leistungsschalter, daß dieser durch ein PWM-Signal (Fig. 4C) getaktet wird, und daß der zugehörige obere Leistungsschalter durch das invertierte PWM-Signal (Fig. 4B) ebenfalls getaktet wird.

Näheres zu der einfachen und zu der wechselseitigen Taktung ist bei Fig. 3 ausgeführt.

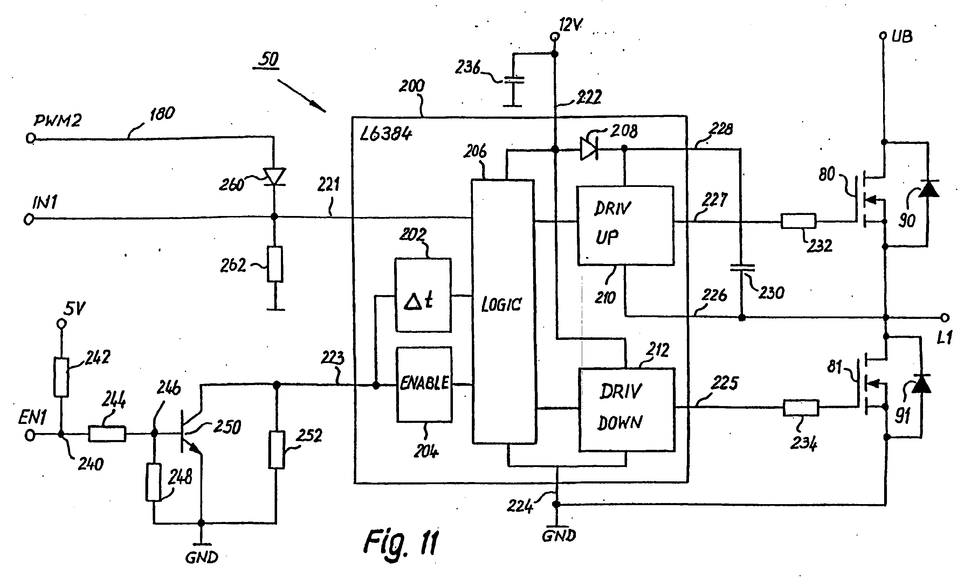

Die Spalten EN1, EN2, EN3 und IN1, IN2, IN3 bestimmen die Ansteuerung eines Treiberbausteins 200 (Fig. 11), der daraus eine wechselseitige Taktung erzeugt. Hierbei bedeutet z.B. EN1 = 0, daß der Treiberbaustein für den Brückenzweig zu L1 aktiviert ist, und EN1 = 1 bedeutet, daß dieser Treiberbaustein nicht aktiviert ist, d.h. daß die Transistoren 80 und 81 gesperrt sind. IN1 = 1 bedeutet, daß bei aktiviertem Treiberbaustein 200 der obere Leistungsschalter 80 geschlossen wird, IN1 = TRISTATE (TRI) bedeutet, daß bei aktiviertem Treiberbaustein 200 ein PWM-Signal PWM2 abwechselnd den oberen Treiber 210 oder den unteren Treiber 212 des Treiberbausteins 200 aktiviert, so daß entweder der Transistor 80 leitet und der Transistor 81 sperrt, oder umgekehrt der Transistor 80 sperrt und der Transistor 81 leitet. Diese Umschaltung erfolgt z.B. mit einer Frequenz von 20 kHz, und bei ihr wird ständig Ladung in den Kondensator 230 gepumpt, so daß dieser stets geladen bleibt. Bei ausgeschaltetem Treiberbaustein (z.B. EN1 = 1) hat der Wert von IN1 keine Auswirkung. Er wird jedoch in diesem Fall üblicherweise auf 1 gesetzt, wie in Fig. 2 dargestellt.

Für das obige Beispiel mit einem Rotor 110 in dem Bereich 0° ... 60° el. bedeutet dies, daß die Treiberbausteine zu den Brückenzweigen der Wicklungsanschlüsse L1 und L2 eingeschaltet sind (EN1 = 0 und EN2 = 0), der Brückenzweig zu Wicklungsanschluß L3 jedoch ausgeschaltet ist (EN3 = 1). Bei dem Brückenzweig zu L1 ist der obere Leistungsschalter 80 geschlossen (IN1 = 1), und bei dem Brückenzweig zu L2 wird durch das PWM-Signal PWM2 zwischen den Leistungsschaltern 83 und 82 hin- und hergeschaltet, wie oben beschrieben.

Bei jeder Stellung des Rotors 110 wird nach der Ansteuerlogik genau einer der Wicklungsanschlüsse L1, L2 und L3 überhaupt nicht bestromt, ein zweiter liegt an der Betriebsspannung $U_B$ und ein dritter wird zwischen der positiven und der negativen Betriebsspannung hin- und hergeschaltet. Es ist deshalb möglich, im Ersatzschaltbild den nicht bestromten Wicklungsanschluß wegzulassen und den Stator 114 als Zweipol zu betrachten. Dies ermöglicht es im folgenden, nur eine Wicklung zu betrachten. Die anderen Wicklungen verhalten sich analog.

**Wechselseitige Taktung**

**Fig. 3** zeigt ein Ersatzschaltbild mit den für die Rotorstellung im Bereich von 0° ... 60° el. aktiven Schaltungsteilen. Gleiche Teile wie in Fig. 1 erhalten die gleichen Bezugszeichen und werden nicht nochmals erwähnt. Die Leistungsschalter 80, 81, 82 sind symbolisch in Form von Schaltern dargestellt.

Die zwischen L1 und L2 geschaltete Statorwicklung 116 (zu der die seriell geschalteten Statorwicklungen 115 und 117, wie in Fig. 1 zu sehen, parallelgeschaltet sind) wird dargestellt als Wicklungsinduktivität 120, Wicklungswiderstand 121 und Spannungsquelle 122 für die beim Drehen des Rotors 110 in die Wicklung 116 induzierte Spannung $U_i$, welche gemäß

$$U_i = n * k_e \qquad ... (2)$$

proportional zur Drehzahl n des Motors und einer Motorkonstanten $k_e$ ist.

Der durch die Wicklung 116 fließende Wicklungsstrom wird mit $i_3$ bezeichnet, der Zwischenkreisgleichstrom $i_1$ ist der geglättete Strom aus dem Zwischenkreis 73, 74, und $i_2$ ist der getaktete Strom der Endstufe.

Der obere Leistungsschalter 82 ist bei einer Rotorstellung im Bereich 0° ... 60° el. geschlossen.

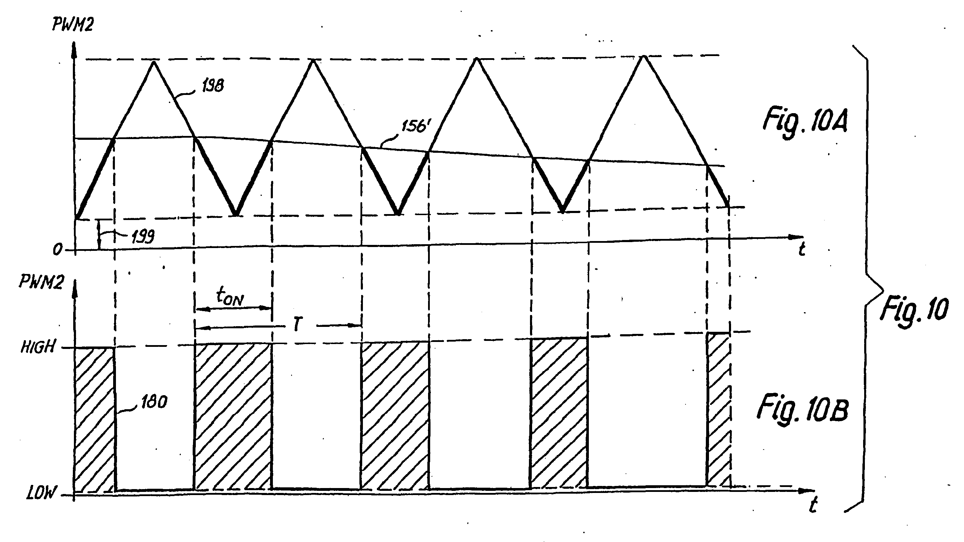

Bei einer einfachen Taktung wird der untere Leistungsschalter 81 durch ein PWM-Signal 228 (pulsweitenmoduliertes Signal) geschlossen und geöffnet, der obere Leistungsschalter 80 bleibt geöffnet. Durch das sogenannte Tastverhältnis $t_{ON}/T$ (Fig. 10) des PWM-Signals 228 wird die Motordrehzahl gesteuert. Bei geschlossenem Schalter 81 fließt der Wicklungsstrom $i_3$ von der Plusleitung 73 über den Leistungsschalter 82, den Wicklungswiderstand 121 und die Wicklung 120 zum Leistungsschalter 81, und der Strom $i_3$ ist gleich dem Strom $i_2$.

Wird der Leistungsschalter 81 geöffnet, so ist die Induktivität 120 bestrebt, den Strom $i_3$ aufrechtzuerhalten. Da die Diode 91 für den Strom $i_3$ nichtleitend ist, fließt der Wicklungsstrom $i_3$ über die Freilaufdiode 90 und über den geschlossenen Schalter 82. Das arithmetische Mittel des getakteten Stromes $i_2$ entspricht hierbei dem Zwischenkreisgleichstrom $i_1$.

Bei einer wechselseitig getakteten Endstufe, wie sie hier bevorzugt verwendet wird, wird der Leistungsschalter 81 wie bei der einfachen Taktung durch das PWM-Signal 228 ein- und ausgeschaltet. Gleichzeitig wird zusätzlich der Leistungsschalter 80 durch das PWM-Signal 227 geöffnet, wenn der Leistungsschalter 81 geschlossen ist und umgekehrt. Das PWM-Signal 227 entspricht also bei Nichtbeachtung einer eventuell vorhandenen Totzeit dem invertierten PWM-Signal 228. Näheres hierzu ist in Fig. 4 ausgeführt.

Durch das wechselseitige Takten wird zum einen erreicht, daß die Freilaufdiode 90 überbrückt wird, an der bei der einfachen Taktung ein Hauptteil der Verlustleistung entsteht. Es wird hierbei ausgenutzt, daß bei MOSFETs der Strom in beiden Richtungen fließen kann. Zum anderen ist durch das wechselseitige Takten ein Wicklungsstrom $i_3$ in beide Richtungen möglich. Bei der einfachen Taktung kann der Wicklungsstrom $i_3$ durch die Diode 90 nur in eine; die den Motor antreibende Richtung fließen.

Ein Wicklungsstrom $i_3$ in die entgegengesetzte Richtung bewirkt eine Bremsung des Motors.

Fig. 4A bis Fig. 4F zeigen Diagramme der in Fig. 3 auftretenden Spannungen, Ströme und Leistungen bei einer wechselseitigen Taktung.

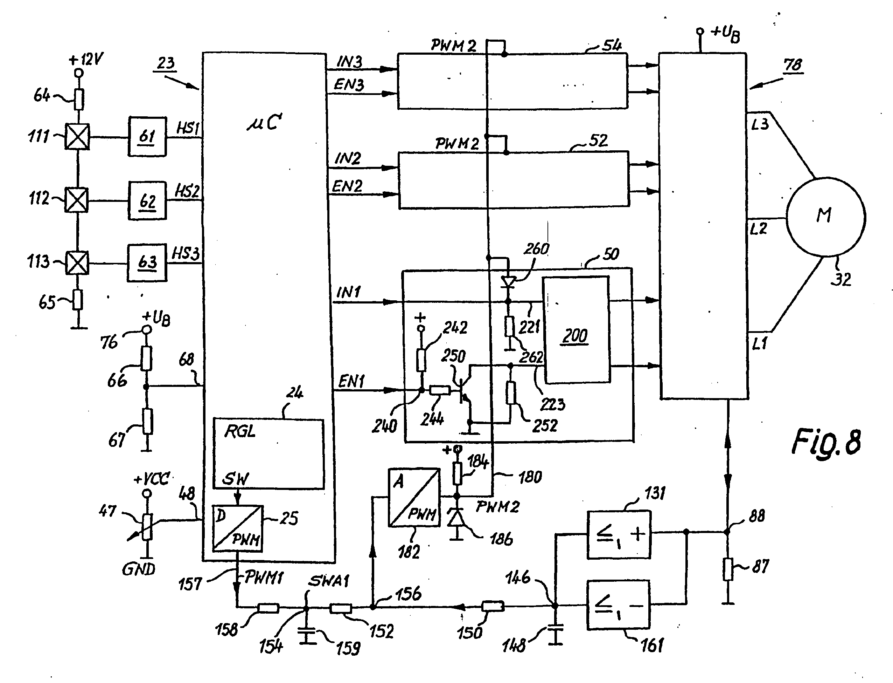

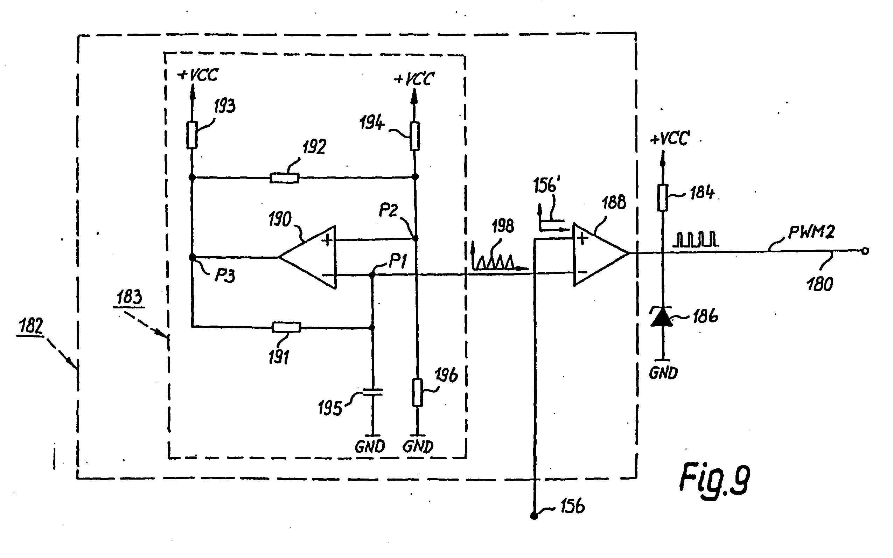

Fig. 4A zeigt ein PWM-Signal PWM2 180, welches z.B. eine Frequenz von 20 KHz hat und in Fig. 8 und Fig. 9 näher beschrieben ist, und mit dem die Signale 227 zur Ansteuerung des Leistungsschalters 80 (Fig. 3) und 228 zur Ansteuerung des Leistungsschalters 81 (Fig. 3) von einem Treiberbaustein 200 (Fig. 11) generiert werden. Die Signale 227 und 228 verlaufen im wesentlichen spiegelbildlich zueinander, d.h. wenn das Signal 227 hoch ist, ist das Signal 228 niedrig, und wenn das Signal 227 niedrig ist, ist das Signal 228 hoch. Diese Signale 227, 228 sind durch Totzeiten $\Delta t$ (z.B. 1 μs) voneinander getrennt, während derer beide Transistoren 80, 81 nichtleitend sind. Während diesen Totzeiten fließt jeweils ein Strom $i_{90}$ (Fig. 4D) durch die Diode 90.

Fig. 4B zeigt schematisch den Strom $i_{80}$, der in Abhängigkeit von dem PWM-Signal 227 durch den Transistor 80 fließt, wenn der Transistor 80 leitend ist, und der Transistor 81 geöffnet ist. Der maximale Strom i_max hat z.B. den Wert 4 A.

Fig. 4C zeigt schematisch den Strom $i_{81}$, der in Abhängigkeit von dem PWM-Signal 225 durch den Transistor 81 fließt, wenn der Transistor 81 leitend ist, und der Transistor 80 geöffnet ist. Der maximale Strom i_max hat z.B. den Wert 4 A.

Fig. 4D zeigt den Strom $i_{90}$, der in jeder Totzeit $\Delta t$ durch die Diode 90 fließt. Der maximale Strom i_max hat z.B. den Wert 4 A. Die Totzeit $\Delta t$ muß eingehalten werden, da bei gleichzeitigem Leitendwerden des Transistors 80 und des Transistors 81 ein Kurzschluß entstehen würde, der die Vollbrücke zerstören würde.

Fig. 4E zeigt die entstehende Verlustleistung P80 von Transistor 80 und P90 von der Diode 90. Die maximale Verlustleistung P80_max des Transistors 80 beträgt z.B. 1 W, die maximale Verlustleistung P90_max der Diode 90 beträgt z.B. 6 W. Durch das wechselseitige Takten wird also die Verlustleistung während der Zeit, die der Transistor 81 geöffnet ist, außerhalb der Totzeit von 6 W auf 1 W reduziert, da während der Zeit $T_{80}$ (Fig. 4E) der Transistor 80 mit seinem niedrigen Innenwiderstand (z.B. 60 mΩ) die Diode 90 überbrückt.

Fig. 4F zeigt die Verlustleistung P81 des Transistors 81. Die maximale Verlustleistung P81_max des Transistors 81 beträgt z.B. 1 W.

Durch das "wechselseitige Takten" der Transistoren 80 und 81 wird also ein Großteil der Verlustleistung, welche bei der einfachen Taktung in der Diode 90 entsteht, vermieden. Dasselbe gilt in Fig. 1 für die Dioden 92 und 94. Bei Reduzierung der Verlustleistung in den Dioden 90, 92, 94 werden die Bauteile der Schaltung weniger stark erwärmt, und es wird eine kompaktere Bauweise möglich.

## Hardware-Strombegrenzung

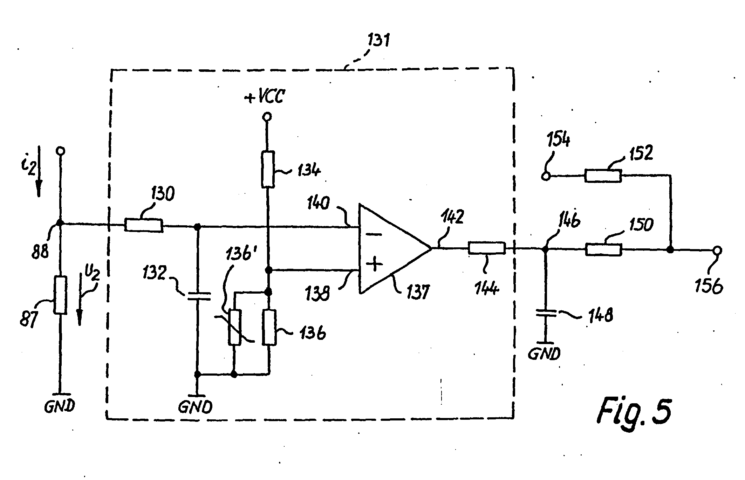

**Fig. 5** zeigt eine Strombegrenzung 131 für den durch den Widerstand 87 fließenden Strom $i_2$. Diese Strombegrenzung ist nur wirksam, wenn der Strom $i_2$ die dargestellte Richtung hat, und wird deshalb als "positive" Strombegrenzung bezeichnet. Ein aus den Widerständen 134 und 136 gebildeter Spannungsteiler (zum NTC-Widerstand 136' siehe weiter unten) gibt am Plus-Eingang 138 eines Komparators 137 ein Potential vor, das dem Potential am Punkt 140 bei einem maximal erlaubten Strom $i_2$ entspricht.

Ist $i_2$ kleiner als der maximal erlaubte positive Strom, so fällt eine kleine Spannung $u_2$ am Widerstand 87 ab, und die am Minus-Eingang 140 des Komparators 137 anliegende Spannung ist kleiner als die am Plus-Eingang 138 des Komparators 137 anliegende Spannung. Der Ausgang 142 des Komparators 137 ist deshalb hochohmig und hat keinen Einfluß auf einen Stellkondensator 148 und damit auch nicht auf einen strombegrenzten Stellwert am Punkt 156. Das RC-Glied aus Widerstand 130 und Kondensator 132 dient als Tiefpaßfilter für die am Widerstand 87 auftretenden Spannungsspitzen.

Wird der Strom $i_2$ jedoch so groß, daß das Potential am Minus-Eingang 140 größer als das am Plus-Eingang 138 des Komparators 137 wird, so schaltet der Ausgang 142 des Komparators 137 auf Masse, vom Kondensator 148 fließt ein Entladestrom über den Widerstand 144, so daß die Spannung am Kondensator 148 abnimmt, ebenso der Stellwert am Punkt 156.

Da der Widerstand 150 kleiner als der Widerstand 152 ist, über welchen der Reglerstellwert von Punkt 154 zu Punkt 156 gelangt, hat das Potential des Punktes 146 Vorrang, und der Stellwert am Punkt 156 wird erniedrigt.

Der Widerstand 144 ist kleiner als der Widerstand 152, so daß die Strombegrenzung 131, die den Kondensators 148 auflädt, Vorrang vor dem Stellwert des Reglers (am Punkt 154) hat.

Der NTC-Widerstand 136' ist optional und bewirkt eine Temperaturabhängigkeit der positiven Strombegrenzung 131. Wird die Temperatur am NTC-Widerstand 136' größer, so sinkt dessen Widerstand, und das Potential an Punkt 138 wird nach unten gegen Masse gezogen. Hierdurch spricht die positive Strombegrenzung 131 bei hohen Temperaturen früher an, und es entsteht weniger Wärme in den Wicklungen.

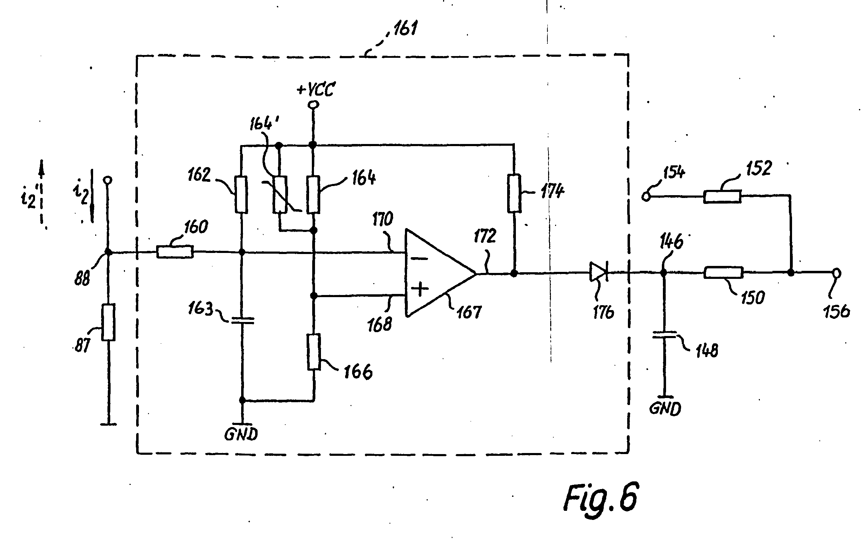

**Fig. 6** zeigt eine "negative" Strombegrenzung 161. Gleiche oder gleichwirkende Teile wie in Fig. 5 erhalten die gleichen Bezugszeichen und werden gewöhnlich nicht nochmals beschrieben.

Die negative Strombegrenzung soll den Bremsstrom $i_2'$ begrenzen. Ein aus den Widerständen 164 und 166 (zum NTC-Widerstand 164' siehe weiter unten) gebildeter Spannungsteiler gibt am Pluseingang 168 eines Komparators 167 ein positives Potential vor, das dem Potential am Punkt 170 bei einem maximal erlaubten Bremsstrom $i_2'$ entspricht. Die Widerstände 160 und 162 bilden einen Spannungsteiler zwischen dem Potential am Punkt 88 und +Vcc, welcher am Punkt 170 des Komparators 167 ein positives Potential bereitstellt.

Ist das Potential am Punkt 88 positiver als das Potential PHI_min, bei dem die negative Strombegrenzung einsetzen soll, so ist durch die Schaltung das Potential am Minus-Eingang 170 des Komparators 167 höher als das am Plus-Eingang 168, und der Ausgang 172 des Komparators 167 ist niederohmig. Eine Diode 176 verhindert ein Entladen des Stellkondensators 148, und der Stellwert an Punkt 156 bleibt unverändert.

Bei größer werdendem Bremsstrom $i_2'$ wird das Potential am Punkt 88 negativer. Wenn die Spannung an Punkt 88 so negativ wird, daß das am Minus-Eingang 170 des Komparators 167 anliegende Potential kleiner als das am Plus-Eingang 168 liegende Potential ist, so wird der Ausgang 172 des Komparators 167 hochohmig.

Über einen Pullup-Widerstand 174 und die Diode 176 fließt jetzt ein Strom von +Vcc zum Kondensator 148, so daß die Spannung am Kondensator 148 ansteigt und der Stellwert am Punkt 156 erhöht wird. Eine Erhöhung des Stellwerts bewirkt, daß das Tastverhältnis des PWM-Signals PWM2 erhöht wird, das in Fig. 3 die Leistungsschalter 80 und 81 umschaltet, d.h. der Leistungsschalter 80 wird prozentual länger geschlossen und der Leistungsschalter 81 wird prozentual länger geöffnet. Dadurch nimmt der Bremsstrom i2' entsprechend ab.

Der Widerstand 174 ist kleiner als der Widerstand 152, so daß die Strombegrenzung 161, die den Kondensators 148 auflädt, vor dem Stellwert des Reglers an Punkt 154 priorisiert ist.

Es folgt ein Beispiel.

Beim Einsetzen der Strombegrenzung betrug das Tastverhältnis 50 %, d.h. während 50 % der Zeit ist der Schalter 81 geschlossen und der Schalter 80 geöffnet, und während der anderen 50 % ist der Schalter 80 geschlossen und der Schalter 81 geöffnet. Die Totzeit wird hier nicht betrachtet. Durch das Einsetzen der Strombegrenzung steigt das Tastverhältnis auf z.B. 60 %. Dann ist während 60 % der Zeit der Schalter 81 geschlossen und der Schalter 80 geöffnet, und während 40 % der Zeit ist der Schalter 81 geöffnet und der Schalter 80 geschlossen. Dadurch sinkt der Bremsstrom entsprechend.

Der NTC-Widerstand 164' ist optional und bewirkt eine Temperaturabhängigkeit der negativen Strombegrenzung 161. Wird die Temperatur am NTC-Widerstand 164' größer, so sinkt dessen Widerstand, und das Potential an Punkt 138 wird nach oben in Richtung +Vcc gezogen. Hierdurch spricht die negative Strombegrenzung 161 schon bei kleineren Bremsströmen $i_2'$ an, und es entsteht weniger Wärme in den Motorwicklungen.

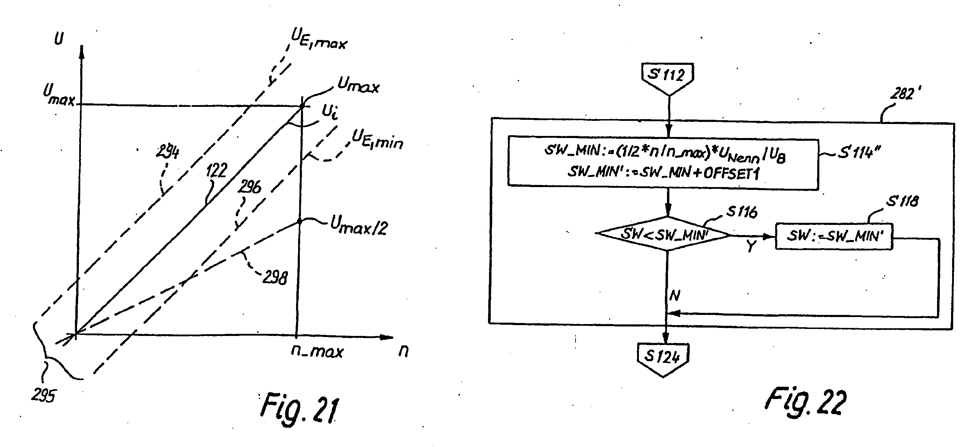

Bei der "negativen" Hardwarestrombegrenzung muß ein minimales Tastverhältnis SW_MIN_CONST von z.B. 15 % eingehalten werden, da unter diesem Wert der durch den Meßwiderstand 87 fließende Stromimpuls so kurz wird, daß keine Messung mehr möglich wäre. Hierdurch wird der Drehzahlbereich des Motors nach unten eingeschränkt. Bei Fig. 22 ist eine Möglichkeit angegeben, diese Einschränkung des Drehzahlbereichs zu umgehen, indem man die Software entsprechend auslegt.

Bei der "positiven" Hardwarestrombegrenzung (Fig. 5) tritt dieses Problem nicht auf, da bei einem sehr kleinen Tastverhältnis nur ein niedriger Antriebsstrom $i_2$ auftritt. Bei einem kleinen Tastverhältnis und einer zu hohen Drehzahl n des Motors 32 können jedoch große Bremsströme $i_2'$ auftreten.

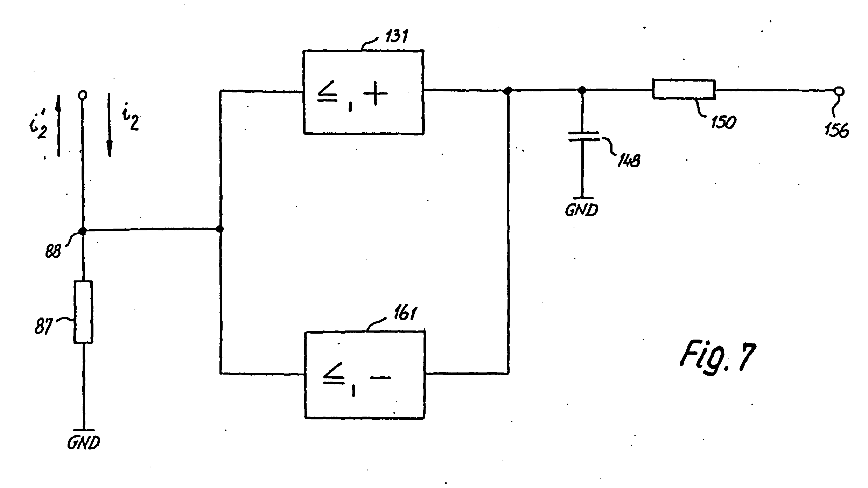

**Fig. 7** zeigt eine Kombination aus "positiver" Strombegrenzung 131 (Fig. 5) und "negativer" Strombegrenzung 161 (Fig. 6). Der Meßwiderstand 87 ist wie in Fig. 5 und 6 geschaltet. Das Potential am Punkt 88 wird sowohl der positiven Strombegrenzung 131 als auch der negativen Strombegrenzung 161 zugeführt. Die Ausgänge der Strombegrenzungen 131 und 161 sind beide an den Kondensator 148 angeschlossen. So kann die positive Strombegrenzung 131 bei zu hohem Motorstrom $i_2$ den Kondensator 148 entladen, und die negative Strombegrenzung kann bei zu hohem Bremsstrom $i_2'$ den Kondensator 148 aufladen. Die Spannung am Kondensator 148 bestimmt über den Widerstand 150 den Stellwert am Punkt 156.

## Übersichtsdarstellung (Fig. 8)

**Fig. 8** zeigt eine Übersicht über ein bevorzugtes Ausführungsbeispiel eines erfindungsgemäßen elektronisch kommutierten Motors 32.

Der Elektromotor 108 weist einen Mikroprozessor oder Mikrocontroller 23, im folgenden µC23 genannt (z.B. PIC 16C72A von Microchip), auf.

Über einen analogen Eingang 48 erhält der µC 23 eine analoge Solldrehzahlvorgabe, welche durch ein als Spannungsteiler geschaltetes Potentiometer 47 gegeben ist und durch einen A/D-Wandler im µC 23 digitalisiert und in eine Solldrehzahl n_s umgewandelt wird. Die Solldrehzahlvorgabe könnte dem Elektromotor 32 z.B. auch mittels einer Frequenz oder eines digitalen Wertes übermittelt werden.

Die Betriebsspannung $U_B$ des Motors 32 wird am Punkt 76 (Fig. 1) abgegriffen und dem µC 23 über zwei Widerstände 66, 67 am analogen Eingang 68 zugeführt, von wo dieser Wert durch einen A/D-Wandler im μC 23 digitalisiert wird. Die Widerstände 66 und 67 transformieren die Betriebsspannung $U_B$ am Punkt 76 in einen für den A/D-Wandler des μC 23 geeigneten Bereich. Über den μC 23 wird eine Betriebsspannungsüberwachung realisiert, d.h. die Spannung am Kondensator 75 (Fig. 1) wird überwacht und im μC 23 ausgewertet, um den Motor 32 entsprechend zu steuern.

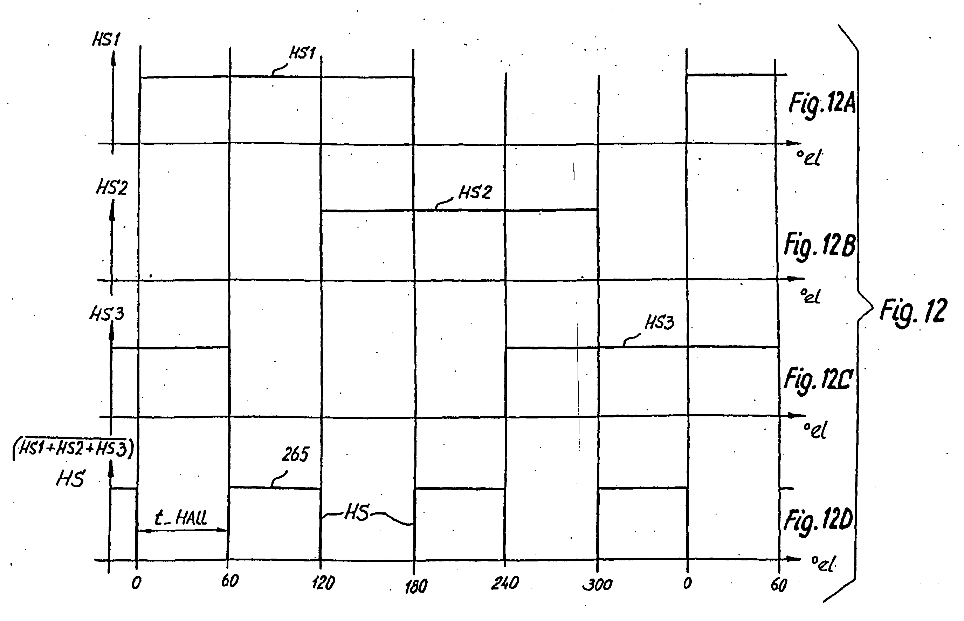

Die Stellung des Rotors 110 (Fig. 1) wird durch die drei in seiner Nähe angebrachten seriell geschalteten Rotorstellungssensoren 111, 112 und 113 erfaßt, welche über einen Widerstand 64 mit +12 V und über einen Widerstand 65 mit Masse (GND) verbunden sind. Die Signale der Rotorstellungssensoren 111, 112 und 113 werden in Rotorstellungssignalaufbereitem 61, 62 und 63 aufbereitet und dem μC 23 als Hallsignale HS1, HS2 und HS3 zugeführt, die in Fig. 12 dargestellt sind.

Der μC23 steuert über die Ausgänge EN1 und IN1 eine Endstufenansteuerung 50, über die Ausgänge EN2 und IN2 eine Endstufenansteuerung 52, und über die Ausgänge EN3 und IN3 eine Endstufenansteuerung 54.

Die Endstufenansteuerungen 50, 52 und 54 steuern die Brückenzweige in der Endstufe 78 für die Wicklungsanschlüsse L1, L2 und L3, über die die Motorwicklungen des Motors 32 bestromt werden. Die Drehzahl des Motors wird über das Tastverhältnis eines in die Endstufenansteuerungen 50, 52 und 54 eingespeisten PWM-Signals PWM2 180 geregelt. Das Signal PWM2 180 wird in einem PWM-Generator 182 mit einem Tastverhältnis erzeugt, das von einem analogen Stellwert, nämlich dem Potential am Punkt 156, bestimmt wird. Eine Zenerdiode 186 bewirkt eine Spannungsbegrenzung des Signals PWM2 180, und ein Widerstand 184 dient als Pullup-Widerstand für den open-cotiector-Ausgang des PWM-Generators 182.

Der analoge Stellwert des PWM-Generators 182, also das Potential am Punkt 156, wird sowohl durch eine Drehzahlregelung 24 im μC 23 als auch durch die Strombegrenzungen 131 und 161 bestimmt, wobei letztere vorrangig sind.

Die Drehzahlregelung 24 im μC 23 berechnet einen digitalen Stellwert SW, der an einen internen PWM-Generator 25 des μC 23 übergeben wird, welcher daraus an einem Ausgang 157 des μC 23 ein PWM-Signal mit einem von dem Stellwert SW abhängigen Tastverhältnis PWM1 erzeugt. Ein aus einem Widerstand 158 und einem Kondensator 159 bestehendes RC-Glied glättet das Signal PWM1 zu einem analogen, im wesentlichen konstanten Signal SWA1 am Kondensator 154. Der Regler 24 im μC 23 gibt also mit Hilfe des PWM-Generators im μC 23 und des RC-Glieds 158, 159 einen analogen Stellwert SWA1 aus.

Findet keine Strombegrenzung durch die Strombegrenzer 131 oder 161 statt, so wird der kleine Kondensator 148, der das Potential an Punkt 156 bestimmt, über die Widerstände 152 und 150 auf das Potential von Punkt 154 aufgeladen. Ohne aktive Strombegrenzer 131 oder 161 wird das Potential am Punkt 156 alleine durch den Regler 24 bestimmt.

Wird jedoch die positive Strombegrenzung 131 (Fig. 5) bzw. die negative Strombegrenzung 161 (Fig. 6) aktiv, so wird der Kondensator 148 (z.B. 330 pF) aufgeladen bzw. entladen, wie bereits beschrieben. Der Widerstand 150 kann sehr klein sein und bevorzugt sogar den Wert 0 Ω haben.

Bei dem Aufladen bzw. Entladen des Kondensators 148 hat die Hardware-Strombegrenzung eine Priorisierung vor der Drehzahlregelung, da der Widerstand 144 (z.B. 3,9 kΩ) zum Entladen des Kondensators 148 (Fig. 5) und der Pullup-Widerstand 174 (z.B. 10 kΩ) zum Aufladen des Kondensators 148 (Fig. 6) viel kleiner als der Widerstand 152 (z.B. 220 kΩ) sind.

Nach dem Ende eines Strombegrenzungsvorgangs wird der kleinere Kondensator 148 wieder auf das Potential von Punkt 154 aufgeladen. Der Kondensator 159 hat z.B. einen Wert von 10 nF.

**PWM-Signalgenerator**

**Fig. 9** zeigt eine bevorzugte Schaltung für den PWM-Generator 182. Gleiche oder gleich wirkende Teile wie in den vorhergehenden Figuren sind mit denselben Bezugszeichen bezeichnet wie dort und werden gewöhnlich nicht nochmals beschrieben.

An dem Pluseingang eines Komparators 188 liegt der strombegrenzte Stellwert 156' in Form des Potentials an Punkt 156 (Fig. 8) vor. An dem Minuseingang des Komparators 188 liegt ein durch einen Dreieckoszillator (Sägezahnoszillator) 183 erzeugtes Dreiecksignal 198 an (Fig. 9).

Der Dreieckoszillator 183 weist einen Komparator 190 auf. Vom Ausgang P3 des Komparators 190 führt ein Mitkopplungswiderstand 192 zu dessen Pluseingang, und ebenso führt ein Gegenkopplungswiderstand 191 vom Ausgang P3 des Komparators 190 zum Minuseingang des Komparators 190. Ein Kondensator 195 liegt zwischen dem Minuseingang des Komparators 190 und Masse. Der Ausgang des Komparators 190 ist ferner über einen Widerstand 193 mit +Vcc verbunden. Der Pluseingang des Komparators 190 ist über zwei Widerstände 194 und 196 mit +Vcc bzw. Masse verbunden.

Zur Erläuterung der Wirkungsweise des Dreiecksgenerators 183 wird auf DE 198 36 882.8 (intern: D216) verwiesen.

Liegt das Potential des Dreiecksignals 198 am Minuseingang des Komparators 188 unter dem des strombegrenzten Stellwerts 156' am Pluseingang des Komparators 188, so ist der Ausgang des Komparators 188 hochohmig, und der Pullup-Widerstand 184 zieht die Leitung PWM2 180 auf HIGH. Liegt die Spannung des Dreieckssignals 198 über der des Referenzsignals 156', so ist der Ausgang des Komparators 188 niederohmig, und das PWM-Signal PWM2 180 ist LOW. Die Zenerdiode 186 begrenzt die Spannung des PWM-Signals PWM2 180.

Wird ein invertiertes PWM-Signal benötigt, so werden der Plus-Eingang und der Minus-Eingang am Komparator 188 vertauscht.

**Fig. 10A** zeigt das Dreiecksignal 198 und den Stellwert 156' am Punkt 156, und **Fig. 10B** das aus Fig. 10A resultierende PWM-Signal PWM2 180.

Das Dreiecksignal 198 aus dem Dreiecksgenerator 183 ist idealisiert dargestellt. In Wirklichkeit hat es keine perfekte Dreiecksform, was jedoch an der Funktionsweise des PWM-Generators 182 aus Fig. 9 nichts ändert. Das Dreiecksignal 198 hat einen Offset 199 von der Spannung 0V. Der Stellwert 156' bewirkt also erst ein Tastverhältnis größer Null, wenn er über dem Offset 199 liegt.

Das Tastverhältnis TV des Signals PWM2 ist das Verhältnis der Dauer $t_{ON}$ des PWM-Signals PWM2 180 während einer Periode des Dreieckssignals auf HIGH ist zu einer ganzen Periode T des Dreieckssignals 198, vgl. Fig. 10B. Es gilt

$$TV = t_{on} / T \quad \quad ... (3)$$

Das Tastverhältnis TV kann zwischen 0 % und 100 % liegen. Ist die Motordrehzahl z.B. zu hoch, so wird das Potential an Punkt 156 erniedrigt und damit das Tastverhältnis TV verkleinert, wie das in Fig. 10A dargestellt ist. Das Ganze wird als Pulsweitenmodulation (PWM) bezeichnet. Die Tastverhältnisse werden zur besseren Verständlichkeit mit PWM1 und PWM2 bezeichnet.

**Endstufenansteuerung**

**Fig. 11** zeigt die Endstufenansteuerung 50 für den Wicklungsanschluß L1. Die übrigen Endstufenansteuerungen 52 und 54 sind gleich aufgebaut.

Die Endstufenansteuerung 50 schaltet ausgehend von den Signalen EN1, IN1 in Verbindung mit dem PWM-Signal PWM2 180 den oberen Leistungsschalter 80 und den unteren Leistungsschalter 81.

Verwendet wird bei diesem Ausführungsbeispiel ein Treiberbaustein 200 vom Typ L6384 der Firma SGS-Thomson.

Der Treiberbaustein 200 weist einen Totzeitgenerator 202, eine Freigabelogik 204, eine Logik 206, eine Diode 208, einen oberen Treiber 210, einen unteren Treiber 212 sowie die Anschlüsse 221 bis 228 auf.

An den Anschlüssen EN1 und IN1 wird der µC 23, oder z.B. eine einfachere Logikschaltung, angeschlossen, vgl. Fig. 8.

Ist die Leitung EN1 auf HIGH oder auf TRISTATE, so schaltet ein Transistor 250 ein und wird niederohmig. Ein Widerstand 252, welcher, wie unten erläutert, eine Totzeit des Treiberbausteins 200 bestimmt, wird hierdurch überbrückt, und dadurch wird der Eingang 223 niederohmig. Dadurch werden der obere Treiber 210 und der untere Treiber 212 und damit auch der Brückenzweig mit den Leistungsschaltern 80, 81 ausgeschaltet. Das Signal IN1 hat keinen Einfluß auf den Treiberbaustein 200. Der µC 23 erhält über den Transistor 250 Kontrolle über den Treiberbaustein 200 und damit auch über den Wicklungsanschluß L1.

Wird die Leitung EN1 auf LOW gesetzt, so wird der Transistor 250 gesperrt und hochohmig. Ein Konstantstrom aus dem Treiberbaustein 200 fließt über den Widerstand 252 (z.B. 150 kΩ) nach Masse. Dabei fällt an dem Widerstand 252 eine Spannung ab, die am Eingang 223 anliegt. Liegt diese Spannung über z.B. 0,5 V, so wird der Treiberbaustein 200 aktiviert. Ist der Transistor 250 dagegen leitend, so fällt diese Spannung auf praktisch Null, und der Treiberbaustein 200 wird deaktiviert. Die Spannung am Eingang 223 dient gleichzeitig zur Einstellung der Totzeit.

Bei einem Resetvorgang am µC 23 sind alle Ein- und Ausgänge des µC 23 hochohmig, also auch IN1 und EN1. In diesem Fall wird über die Widerstände 242 und 244 der Transistor 250 eingeschaltet und damit der Treiberbaustein 200 ausgeschaltet. Dies bringt zusätzliche Sicherheit.

Eine Schaltung ohne den Transistor 250 und die Widerstände 242, 244 und 248 wäre theoretisch ebenfalls möglich. In diesem Fall müßte das Signal EN1 zum Einschalten des Treiberbausteins 200 auf TRISTATE gesetzt werden und zum Ausschalten auf LOW. Bei einem Reset des µC 23 werden jedoch, wie oben aufgeführt, die Ein- und Ausgänge des µC 23 hochohmig, und damit wäre der Treiberbaustein 200 und damit auch der jeweilige Brückenzweig eingeschaltet, was zu unkontrollierten Schaltzuständen führen könnte und nicht erwünscht ist.

Bei aktiviertem Treiberbaustein 200 (EN1 = LOW) kann über den Eingang 221 eingestellt werden, ob der obere Leistungsschalter 80 oder der untere Leistungsschalter 81 leitend gemacht werden soll.

Ist der Eingang 221 auf LOW, so ist der untere Treiber 212 eingeschaltet und der Leistungsschalter 81 geschlossen, der obere Leistungsschalter 80 ist geöffnet.

Ist der Eingang 221 dagegen auf HIGH, so ist es genau umgekehrt. Der obere Leistungsschalter 80 ist geschlossen und der untere Leistungsschalter 81 geöffnet.

Bei jedem Wechsel des Signals am Eingang 221 des Treiberbausteins 200 wird durch den Totzeitgenerator 202 eine Totzeit eingehalten, während der beide Treiber 210 und 212 ausgeschaltet sind, damit es in den einzelnen Brückenzweigen nicht zum Kurzschluß kommt. Die Totzeit kann über die Größe des Widerstands 252 eingestellt werden und beträgt z.B. 1 µs.

Der Ausgang IN1 kann bei aktiviertem Treiberbaustein (EN1 = 0) auf drei unterschiedliche Arten benutzt werden.

Bei IN1 = TRISTATE wird das PWM-Signal 180 über die Diode 260 vorrangig eingeschleust, und dieses Signal bewirkt die wechselseitige Taktung des dargestellten Brückenzweigs 80, 81 mit dem Tastverhältnis PWM2 des PWM-Signals 180. Der Widerstand 262 zieht dabei die Spannung am Eingang 221 auf 0 V, wenn das PWM-Signal auf LOW ist, da dies über die Diode 260 nicht möglich ist. Bei IN1 = TRISTATE hat also das PWM-Signal 180 Vorrang vor dem Ausgang IN1 des µC 23.

Durch Setzen von IN1 auf HIGH schaltet der µC 23 den oberen Treiber 210 des Treiberbausteins 200 ein. Das Signal des Ausgangs IN1 ist vorrangig vor dem PWM-Signal, wenn IN1 = 1 ist, d.h. das PWM-Signal 180 hat dann keinen Einfluß.

Durch Setzen von IN1 auf LOW schaltet der µC 23 den unteren Treiber 212 des Treiberbausteins 200 ein. Das Signal des Ausgangs IN1 ist auch hier vorrangig vor dem PWM-Signal, d.h. dieses hat auch hier keinen Einfluß. Das Signal IN1 wird nur auf Null gesetzt, wenn ein Pumpen über den µC 23 geschieht, d.h. der Treiberbaustein 200 kann so gesteuert werden, daß die Brückentransistoren als Ladungspumpe dienen.

Durch das Einschleusen des PWM-Signals PWM2 180 über die Diode 260 zusammen mit dem Widerstand 262 kann der µC 23 bestimmen, ob das Signal PWM2 180 Vorrang für die Ansteuerung des Eingangs 221 des Treiberbausteins 200 haben soll. Soll das Signal PWM2 180 Vorrang haben, dann setzt der µC 23 IN1 auf TRISTATE. Der µC 23 hat jedoch Vorrang, wenn er IN1 auf HIGH oder LOW setzt.

Es ist eine Besonderheit dieser Schaltung, daß das PWM-Signal PWM2 180 erst so kurz vor dem Treiberbaustein 200 eingeschleust wird und der µC 23 trotzdem die Kontrolle über den Treiberbaustein behält. Die Logik der Kommutierung wird zuerst berechnet und ausgegeben, und erst daraufhin wird das PWM-Signal PWM2 180 eingeschleust.

Ein Kondensator 230 und die im Treiberbaustein 200 integrierte Diode 208 stellen eine BOOTSTRAP-Schaltung dar. Die BOOTSTRAP-Schaltung ist notwendig, wenn für den oberen Leistungsschalter 80 N-Kanal MOSFETs verwendet werden, weil diese eine Ansteuerspannung benötigen, welche über der zu schaltenden Spannung - hier $U_B$ - liegt.

Ist der Leistungsschalter 81 geschlossen, so liegt der Wicklungsanschluß L1 auf Masse, und der Kondensator 230 wird über die Diode 208 auf + 12 V aufgeladen, wie in Fig. 11 dargestellt. Wird der Leistungsschalter 81 ausgeschaltet und der Leistungsschalter 80 eingeschaltet, so steht dem oberen Treiber über den Eingang 228 eine Spannung zur Verfügung, weiche 12 V über der Spannung des Wicklungsanschlusses L1 liegt. Der obere Treiber 210 kann somit den oberen Leistungsschalter 80 einschalten, solange der Kondensator 230 geladen ist.

Der Kondensator 230 muß deshalb in regelmäßigen Abständen aufgeladen werden, was als Pumpen bezeichnet wird. Dieses Prinzip ist dem Fachmann als Ladungspumpe bekannt. Das Pumpen wird durch den µC 23 überwacht und gesteuert.

Zwei Widerstände 232 und 234 begrenzen den maximalen Treiberstrom für die Transistoren 80, 81, und ein Kondensator 236 liefert einen für den Treiberbaustein 200 benötigten kurzzeitig hohen Strom.

**Pumpen**

Wird bei der Schaltung gemäß Fig. 11 der untere Treiber 212 längere Zeit nicht eingeschaltet, so entlädt sich der Kondensator 230, und der obere Treiber 210 kann den oberen Leistungsschalter 80 nicht mehr schließen.

Im normalen Betrieb des Motors 32 in eine bestimmte Richtung wird nach Fig. 3 ein Brückenzweig stets wechselseitig getaktet. Dies geschieht so oft, daß ein ausreichendes Pumpen gewährleistet ist und der Kondensator 230 stets ausreichend geladen ist.

Wird der Motor 32 jedoch sehr langsam oder bleibt er stehen, so ist das ausreichende Pumpen nicht mehr gewährleistet. Dieser Fall kann anhand der Hallzeit t_HALL (Fig. 12), also der Zeit zwischen zwei aufeinanderfolgenden Änderungen des Hallsignals HS (Fig. 12D), überprüft werden. Überschreitet die Hallzeit z.B. 10 ms, so muß neu gepumpt werden.

Ein weiterer Fall, bei dem zwar Hallwechsel stattfinden, ein ausreichendes Pumpen jedoch nicht gewährleistet ist, ist ein Oszillieren des Motors um eine Ruhestellung, weil der Rotor 110 z.B. blockiert ist. Es kann z.B. vorkommen, daß sich der Rotor 110 immer zwischen zwei Bereichen hin- und herbewegt, in denen die wechselseitige Taktung nur beim Wicklungsanschluß L1 bzw. L2 stattfindet. L3 muß in diesem Fall gepumpt werden.

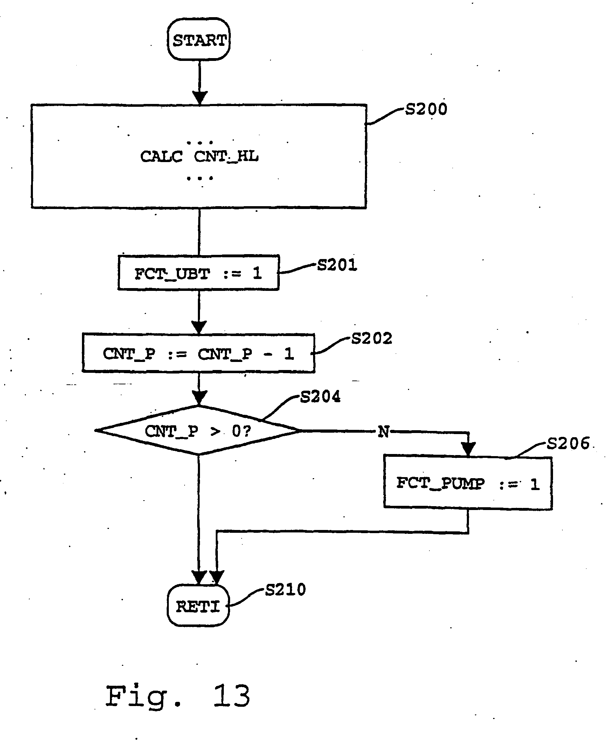

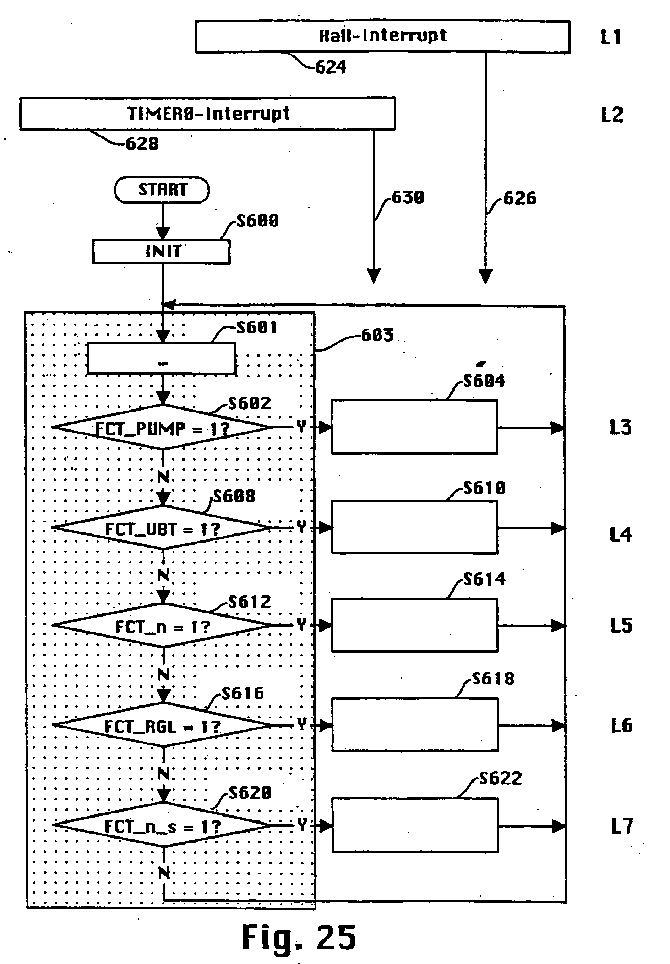

Ein ausreichendes Pumpen kann in diesem zweiten Fall gewährleistet werden, indem bei jedem Richtungswechsel des Motors 32 gepumpt wird. Der Richtungswechsel wird in der Kommutierungsroutine über die Rotorstellungssensoren 111, 112 und 113 detektiert. Bei einem Richtungswechsel wird das Flag FCT_PUMP (S206 in Fig. 13, S602 in Fig. 25) auf 1 gesetzt. Hierdurch wird dem Hauptprogramm im μC 23 (Fig. 25) mitgeteilt, daß gepumpt werden soll. Danach wird in Fig. 13 nach S210 gesprungen.

Ist FCT_PUMP = 1, so wird von dem Funktionsmanager 600 (Fig. 25) eine Pumpfunktion S604 (Fig. 25) aufgerufen. In der Pumpfunktion S604 werden alle Leitungen EN1, IN1, EN2, IN2, EN3, IN3 des μC 23 für eine Zeit von ca. 15 bis 20 μs auf LOW gesetzt. Hierdurch werden die unteren Leistungsschalter 81, 83 und 85 eingeschaltet, die oberen Leistungsschalter 80, 82, 84 werden ausgeschaltet, und somit werden alle Endstufenansteuerungen 50, 52 und 54 gepumpt. Nach dem Pumpen werden die Endstufenansteuerungen wieder entsprechend der gespeicherten Hallsignale HS1, HS2 und HS3 aktiviert, wie anhand von Fig. 1 und Fig. 2 beschrieben.

**Fig. 12** zeigt die Bildung eines Hallsignals HS 265 als Summe bzw. Antivalenz aus den Hallsignalen HS1, HS2 und HS3 der Rotorstellungssensoren 111, 112 und 113. Das Hallsignal HS 265 wechselt bei jedem auftretenden Wechsel der Hallsignale HS1, HS2 bzw. HS3 von HIGH auf LOW bzw. LOW auf HIGH, so daß das Hallsignal HS 265 alle 60° el. (30° mech.) wechselt.

Anhand der Hallzeit t_HALL (Fig. 12D) zwischen zwei Hallwechseln kann die Drehzahl n des Rotors 110 gemessen werden.

Da eine elektrische Umdrehung (360 °el.) in diesem Ausführungsbeispiel sechs Hallwechseln entspricht, erfolgen pro mechanischer Umdrehung 12 Hallwechsel. Für die Istdrehzahl n gilt

$$n = 1 / (12 \times t\_HALL) \quad ... (4)$$

**Fig. 13** zeigt ein Flußdiagramm einer Interruptroutine TIMERØ_ROUT, in der bei einer zu niedrigen Drehzahl des Rotors 110 ein Pumpen angefordert wird.

Die Interruptroutine TIMERØ_ROUT wird durch einen Timer-Interrupt aufgerufen, welcher durch einen in dem μC 23 integrierten Timer TIMERØ in regelmäßigen Abständen erzeugt wird. Der Timer TIMERØ ist z.B. ein Byte (256 Bit) groß, und bei einer Prozessorfrequenz von 10 MHz und einer Vorskalierung (Prescale) von 8 erreicht er alle 256 x 8 x 0,4 μs = 820 μs den Wert 0, und ein Timer-Interrupt wird ausgelöst. Die 0,4 μs ergeben sich daraus, daß bei einer Prozessorfrequenz von 10 MHz ein Takt 0,1 μs benötigt, und der Prozessor für jeden Befehl vier Takte und damit 0,4 μs benötigt. Daran ist ebenfalls der Timer TIMERØ gebunden.

S200 steht stellvertretend für alle übrigen Schritte, welche in der Interruptroutine T1MERØ_ROUT ablaufen. Mit Hilfe des Timers TIMERØ wird z.B. ebenfalls ein Ringzähler CNT_HL inkrementiert, welcher zur Berechnung der Hallzeit t_HALL verwendet wird.

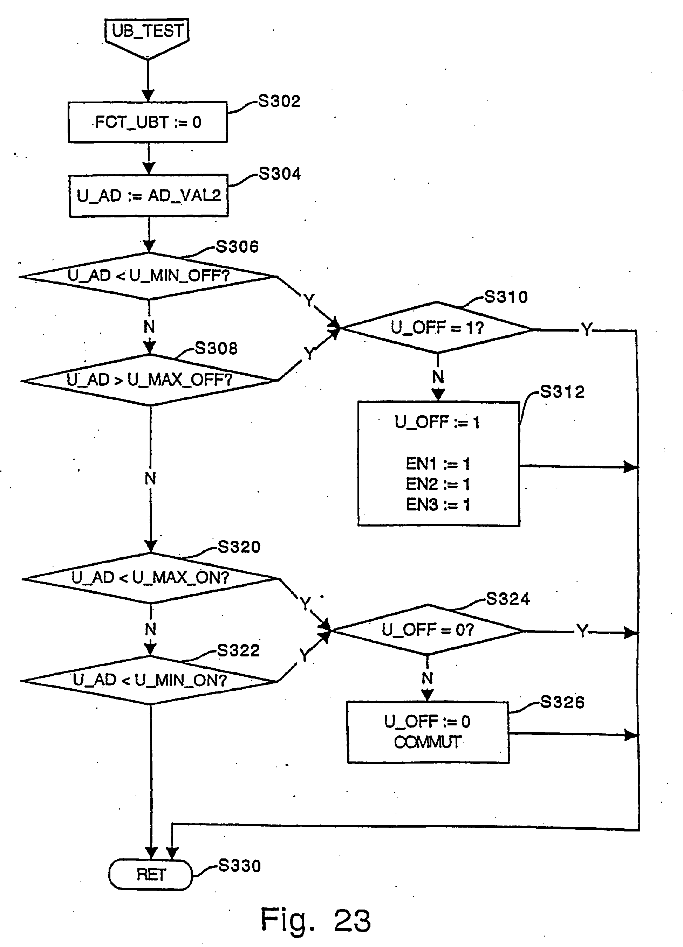

In S201 wird die Überwachung der Betriebsspannung $U_B$ (fig. 23) durch das Setzen einer Variablen FCT_UBT auf 1 angefordert.

In S202 wird ein Zähler CNT_P um Eins dekrementiert.

In S204 wird CNT_P überprüft. Falls CNT_P > 0 ist, so wird nach S210 gesprungen, ansonsten nach S206.

In S206 wird der Wert FCT_PUMP auf 1 gesetzt. Hierdurch wird dem Hauptprogramm im μC 23 (Fig. 25) mitgeteilt, daß die Pumpfunktion S604 (Fig. 25) aufgerufen werden soll. Danach wird nach S210 gesprungen.

In S210 wird die Interruptroutine TIMERØ_ROUT verlassen.

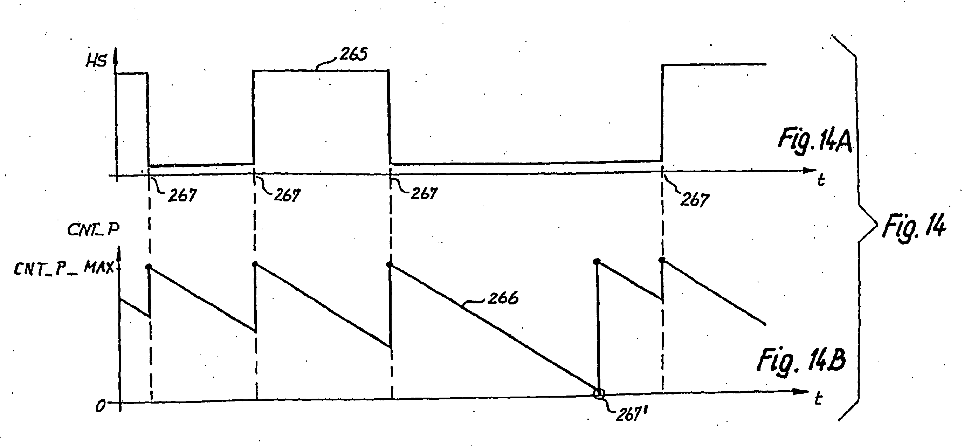

**Fig. 14A** und **Fig. 14B** zeigen eine mit Hilfe der Timerinterruptroutine TIMERØ_ROUT (Fig. 13) ausgeführte Pumpüberwachung. Das Hallsignal HS 265 ist im oberen Diagramm über die Zeit t aufgetragen, darunter ist der Wert 266 des Pumpzählers CNT_P über die Zeit t aufgetragen. Bei jedem Wechsel 267 des Hallsignals HS wird der Pumpzähler CNT_P auf den Wert CNT_P_MAX (z.B. CNT_P_MAX = 11) gesetzt. Danach wird er in der Interruptroutine TIMERØ_ROUT heruntergezählt.

Erreicht der Zähler CNT_P nicht die Null, so ist die Motordrehzahl schnell genug, und das Pumpen ist gewährleistet.

Erreicht der Zähler CNT_P jedoch z.B. bei Punkt 267 den Wert Null, so wird durch die Interruptroutine TIMERØ_ROUT ein Pumpen durch den μC 23 angefordert. Bei einem Anfangswert CNT_P_MAX = 11 erreicht der Zähler CNT_P nach 11 x 820 μs = 9 ms die Null. Ein Pumpen findet also mindestens alle 11 x 820 μs = 9 ms statt.

**Regler**

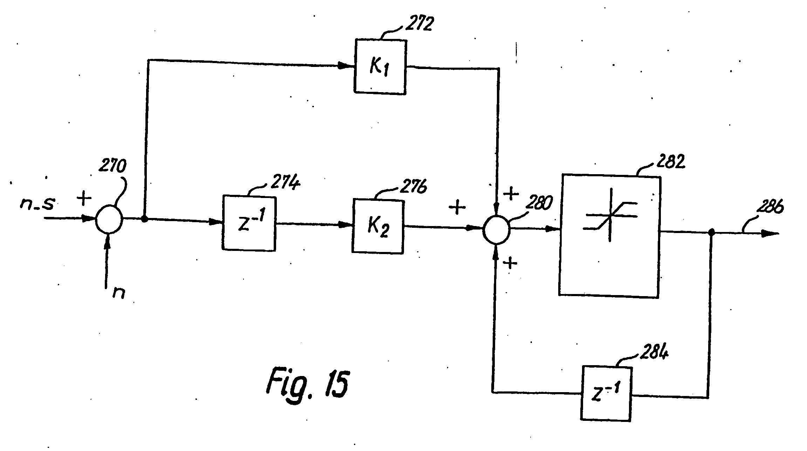

**Fig. 15** zeigt ein Ausführungsbeispiel des Reglers 24 im μC 23 als PI-Regler.

In einem Punkt 270 wird die aktuelle Regeldifferenz (n_s - n) aus der Differenz zwischen Solldrehzahl n_s und Istdrehzahl n berechnet.

In einem Punkt 280 werden drei gewichtete Werte addiert. Dies ist zum ersten eine mit K1 (z.B. K1 = 30,38) gewichtete aktuelle Regeldifferenz.

Zum zweiten ist dies eine mit K2 (z.B. K2 = -0,62) in 276 bewertete alte Regeldifferenz. $Z^{-1}$ in 274 bedeutet hierbei, daß der vorhergehende Wert aus 270 verwendet werden soll.

Zum dritten wird ein alter Stellwert über 284 in 280 addiert. Hierdurch erreicht man ein sogenanntes Anti-Windup, das zur Verbesserung des Reglers 24 im μC 23 führt.

Das Ergebnis aus dem Summierglied 280 wird in 282 begrenzt und schließlich in 286 als Stellwert ausgegeben.

Für K1 und K2 gilt bei diesem Beispiel

$$K1 = P + I = 31 \qquad \dots (5)$$

$$K2 = -P = -30{,}38 \qquad \dots (6)$$

wobei P der P-Anteil und I der I-Anteil des PI-Reglers 24 ist. Es gilt also P = 30,38 (entspricht 98 %) und I = 0,62 (entspricht 2 %).

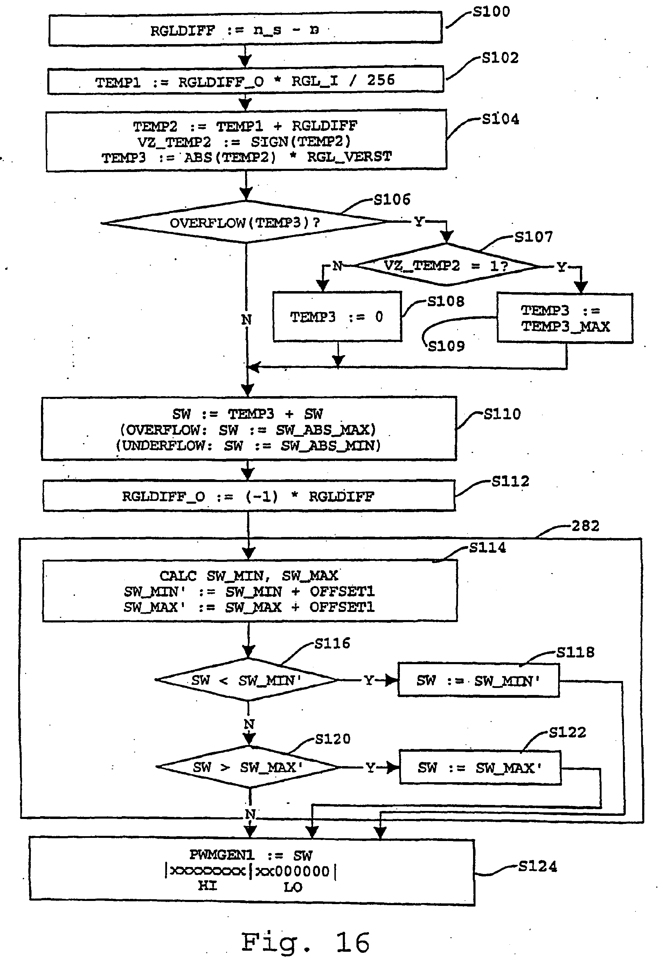

**Fig. 16** zeigt ein Flußdiagramm einer Ausführungsform des Reglers 24 aus Fig. 15.

In S100 wird eine Regeldifferenz RGLDIFF aus der Differenz zwischen Sollwert n_s und Istwert n gebildet.

In S102 wird eine alte Regeldifferenz RGLDIFF_O bewertet. Die Bewertung geschieht durch Multiplikation mit einem Wert RGL_I (z.B. 0xF9 = 249) und anschließender Division durch 256 (0x0100). RGLDIFF_O war im Regeldurchlauf zuvor schon mit -1 multipliziert worden (S112). Das Ergebnis wird in einer Variablen TEMP1 gespeichert.

In S104 werden die aktuelle Regeldifferenz RGLDIFF und die bewertete alte Regeldifferenz TEMP1 addiert und in einem Wert TEMP2 gespeichert. Das Vorzeichen von TEMP2 wird in einem Wert VZ_TEMP2 gesichert. Der Absolutwert von TEMP2 wird mit einem Wert RGL_VERST multipliziert und in TEMP3 gespeichert. Die Multiplikation bewirkt eine Verstärkung von sowohl dem P- als auch dem I-Anteil. Tritt bei dieser Multiplikation ein Überlauf auf, so wird von S106 nach S107 gesprungen.

In S107 wird VZ_TEMP2 überprüft. Ist VZ_TEMP2 = 1, so wird TEMP3 in S109 auf einen maximalen Wert TEMP3_MAX (z.B. alle Bytes 0xFF) gesetzt. Ansonsten wird TEMP3 in S 108 auf 0 gesetzt.

In S110 wird ein neuer Stellwert SW (Wert an der Stelle 280 in Fig. 15) durch Addition von TEMP3 und einem alten Stellwert SW gebildet. Tritt hierbei ein Überlauf (Overflow) auf, so wird der Stellwert SW auf SW_ABS_MAX (z.B. alle Bytes 0xFF) gesetzt, bei einem Unterlauf (Underflow) wird der Wert SW auf SW_ABS_MIN (z.B. alle Bytes 0x00) gesetzt.

In S112 wird die aktuelle Regeldifferenz RGLDIFF in RGLDIFF_O für den nächsten Durchlauf des Reglers 24 gesichert. Hierbei wird gleichzeitig das Vorzeichen von RGLDIFF gewechselt.

Nach S112 wird in einem Regterabschnitt 282 eine Stellwertbegrenzung durchgeführt (Schritte S114 bis S122).

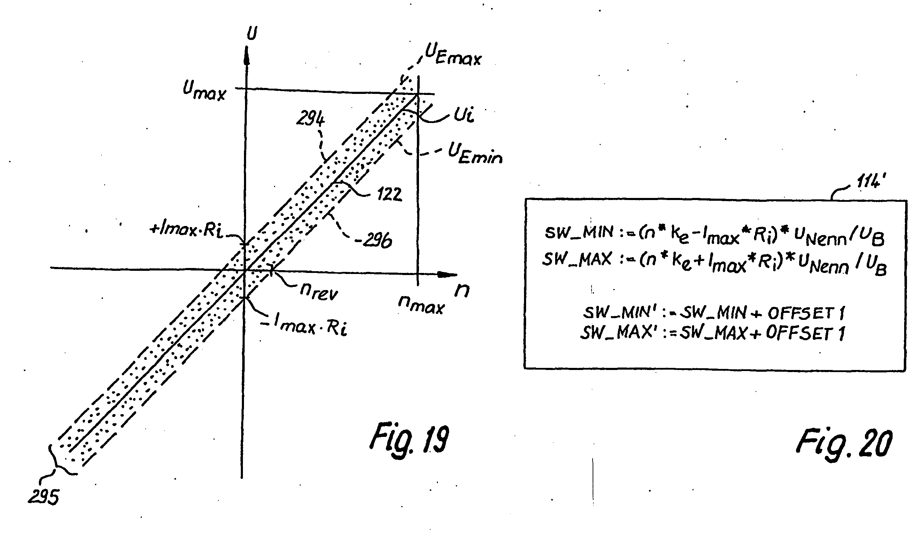

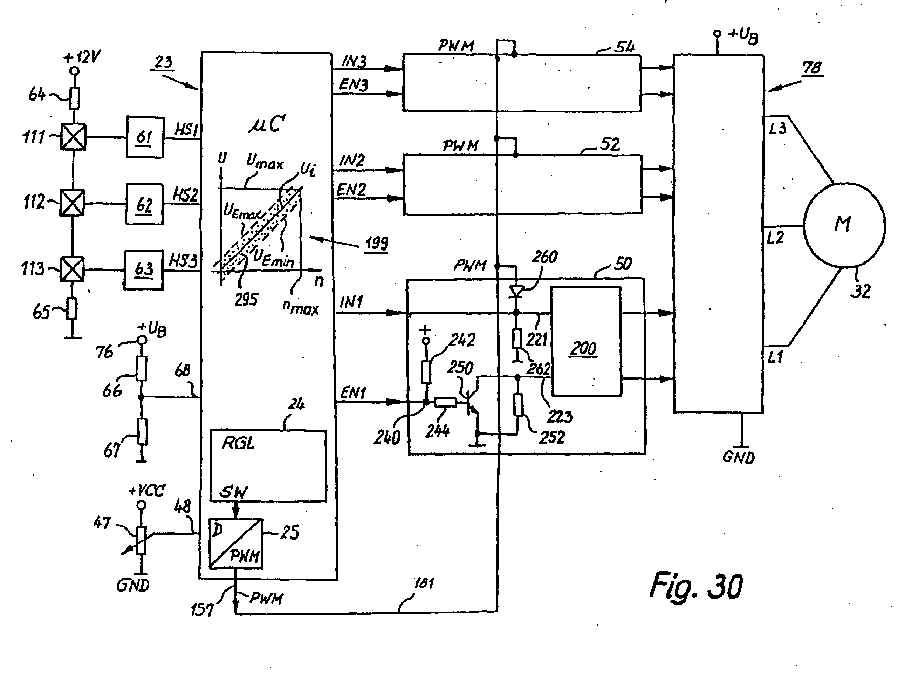

In S114 wird ein minimaler Stellwert SW_MIN und ein maximaler Stellwert SW_MAX berechnet (CALC). Näheres zu diesen extremalen Stellwerten ist in den Fig. 20, 22 und 28 ausgeführt. Zu den maximalen Stellwerten wird ein Offset OFFSET1 addiert, der daher kommt, daß das Dreiecksignal des Dreiecksgenerators 183 (Fig. 9) einen Offset 199 von der Spannung 0 V hat (Fig. 10A). Dieser Offset ist in dem Stellwert SW bereits enthalten, in den berechneten extremalen Stellwerten SW_MIN und SW_MAX jedoch nicht. Bei der Variante gemäß Fig. 30 entfällt dieser Offset, worauf besonders hingewiesen wird.

In S116 wird überprüft, ob der Stellwert SW kleiner als SW_MIN' ist. In diesem Fall wird SW in S118 auf SW_MIN' gesetzt.

In S120 wird überprüft, ob SW größer SW_MAX' ist. Ist dies der Fall, so wird SW in S122 auf SW_MAX' gesetzt.

Die Werte SW_MIN' und SW_MAX' werden gemäß S114 berechnet.

In S124 wird der begrenzte Stellwert SW an den PWM-Generator 25 übergeben (PWMGEN1). Der PWM-Generator 25 besitzt eine Auflösung von 10 Bit. Übergeben werden deshalb z.B. die acht Bit des High Byte von SW und die höchstwertigsten zwei Bit des Low Byte (mit x bezeichnet). Die restlichen Bit werden nicht verwendet (mit 0 bezeichnet).

Dieser Regler 24 hat eine sehr hohe Genauigkeit, z.B. eine Abweichung von +/- 1U/min bei einer Drehzahl von 10000 U/min.

Der Regler 24 muß an den jeweiligen Motortyp durch Veränderung der Verstärkungsfaktoren RGL_I (S102), RGL_VERST (S104) angepaßt werden und die Größe der Variablen passend gewählt werden. Bei den jeweiligen Rechenoperationen ist jeweils auf Überläufe und Unterläufe zu prüfen.

**Strombegrenzung durch Software**

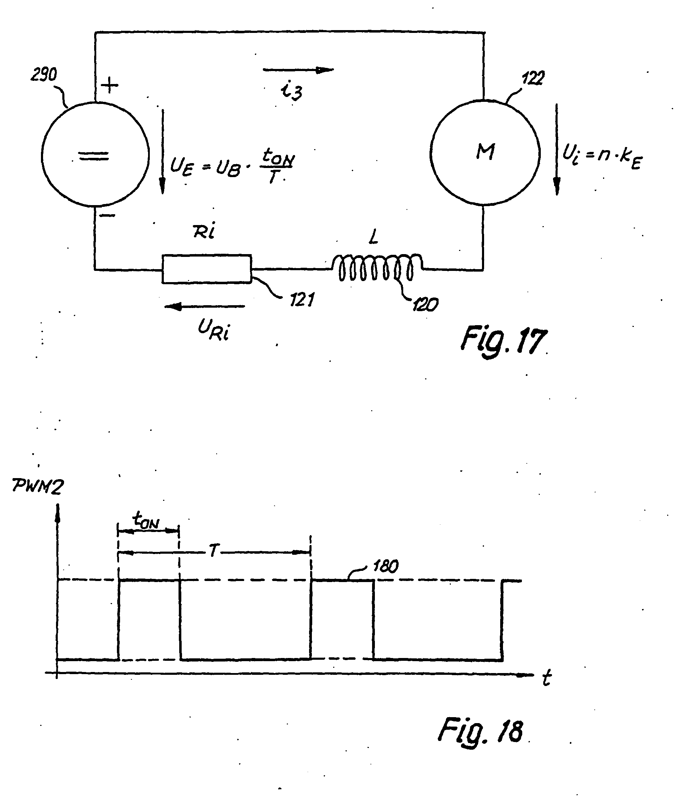

Fig. 17 zeigt ein weiter vereinfachtes Ersatzschaltbild von Fig. 3, und Fig. 18 zeigt ein beispielhaftes PWM-Signal PWM2, das mit der Bezugszahl 180 bezeichnet ist. Gleiche Teile werden mit den gleichen Bezugszeichen bezeichnet wie in den vorhergehenden Figuren.

Die Versorgungsspannung $U_B$ wird durch das Signal PWM2 180 (Fig. 8) proportional zu dessen Tastverhältnis $t_{ON}/T$ (Fig. 18) reduziert. Die resultierende reduzierte Spannung wird mit $U_E$ bezeichnet. Es gilt angenähert

$$U_E = U_B * PWM2 = U_B * t_{ON}/T \qquad ... (7)$$

Die in einer Statorwicklung 116 (Fig. 3) durch die Drehung des permanentmagnetischen Rotors 110 induzierte Spannung $U_i$ wird durch eine mit 122 bezeichnete Spannungsquelle M dargestellt. Ist die Ersatzspannung $U_E$ gemäß Gleichung (7) größer als diese induzierte Spannung $U_i$, so stellt sich ein positiver Wicklungsstrom $i_3$ ein. Das Produkt aus $U_i$ und $i_3$ ist ebenfalls positiv, d.h. der Motor 32 nimmt Energie auf und wird angetrieben.

Wird die induzierte Spannung $U_i$ jedoch größer als die Ersatzspannung $U_E$, so stellt sich ein negativer Wicklungsstrom $i_3$ ein, und der Motor 32 bremst, da er jetzt als Generator arbeitet. Die in Fig. 17 dargestellte Richtung des Stromes $i_3$ kehrt sich um.

Die induzierte Spannung $U_i$ wird oft auch als die Gegen-EMK (counter EMF) eines solchen Motors bezeichnet. Ihre Größe ergibt sich aus der Gleichung (2).

Ebenso wie in Fig. 3 wird in Fig. 17 der Wicklungswiderstand $R_i$ mit 121 und die Wicklungsinduktivität L mit 120 bezeichnet.

**Fig. 19** zeigt ein Diagramm, in dem die induzierte Spannung $U_i$ (Fig. 3) über der Drehzahl n als Kurve 122 aufgetragen ist. Gemäß Gleichung (2) gilt $U_i = n * k_e$

Weiterhin sind zwei gestrichelte Kurven 294, 296 aufgetragen, welche die maximale bzw. minimale zulässige Ersatzspannung $U_{E,max}$ bzw. $U_{E,min}$ anzeigen. Diese Ersatzspannungen ergeben sich gemäß Gleichung (7) aus dem Tastverhältnis PWM2 und der Spannung $U_B$. $n_{rev}$ ist die Reversierdrehzahl, ab der bei Vorhandensein einer positiven Strombegrenzung eine Reversierung, d.h. eine Kommutierung für die entgegengesetzte Drehrichtung, möglich ist:

Im folgenden wird erläutert, wie die Begrenzungskurven 294 und 296 zustandekommen und welche Bedeutung sie haben.

Der Wicklungsstrom $i_3$ durch die Endstufe 78 (Fig. 3) läßt sich gemäß Fig. 17 aus der Spannung $U_{Ri}$ am Widerstand 121 und dem Wert $R_i$ des Widerstands 121 nach der folgenden Gleichung (8) berechnen:

$$i_3 = U_{Ri}/R_i \qquad ... (8)$$

Nach längerer Bestromung hat die Induktivität L 120 keinen Einfluß mehr, und die Spannung $U_{Ri}$ am Widerstand 121 ergibt sich zu

$$U_{Ri} = U_E - U_I = U_B * t_{ON}/T - n * k_e = i_3 * R_i \qquad ... (9)$$

Daraus folgt für den Wicklungsstrom $i_3$

$$i_3 = (U_B * t_{ON}/T - n * k_e) /R_i \quad ... (10)$$

Für die Ersatzspannung $U_E$ gilt

$$U_E = n * k_e + i_3 * R_i \quad ... (11)$$

Der Strom $i_3$ durch eine Statorwicklung 116 des Motors 32 ist eine kritische Größe bei der Bestromung durch die Endstufe 78, also bei der Steuerung der Transistoren dieser Endstufe. Wird $i_3$ zu groß, so entsteht eine große Wärme in der Statorwicklung, und schlimmstenfalls werden die Permanentmagnete des Rotors 110 (Fig. 1) durch das resultierende hohe Magnetfeld des Stators 114 entmagnetisiert, wodurch der Motor 32 nicht mehr funktionsfähig ist. Dieser Zustand muß also verhindert werden.

Der maximale Strom $I_{max}$ in der Statorwicklung beim motorischen Betrieb ist gewöhnlich im Datenblatt angegeben, und beim Bremsbetrieb beträgt dieser zulässige Strom gewöhnlich $-I_{max}$.

Hieraus ergibt sich für die maximale Ersatzspannung $U_{Emax}$

$$U_{Emax} = n \cdot k_e + I_{max} \cdot R_i \quad \ldots (12)$$

Ebenso ergibt sich für die minimale Ersatzspannung UEmin

$$U_{Emin} = n \cdot k_e - I_{max} \cdot R_i \quad \ldots (13)$$

Wird beispielsweise der Motor 32 bei einer Drehzahl 0 U/min mit einer Spannung $U_E$ betrieben, die zwischen $- I_{max} \cdot R_i$ und $+ I_{max} \cdot R_i$ liegt, so ist der Strom $i_3$ kleiner als $I_{max}$.

Befindet sich also die Ersatzspannung $U_E$, welche dem Motor 32 zugeführt wird, in einem Bereich 295 (Fig. 19) zwischen den Kurven 296 und 294, so arbeitet der Motor 32 in einem sicheren Arbeitsbereich, d.h. der Rotor 110 wird nicht entmagnetisiert, und die Statorwicklung des Motors wird nicht zu stark erwärmt.

Die Größe des sicheren Arbeitsbereichs 295, also der Abstand zwischen $U_{Emin}$ und $U_{Emax}$, ist stark abhängig von dem Wert $R_i$ des Wicklungswiderstands 121. Ist dieser Wert groß, so hat der Motor 32 einen großen sicheren Arbeitsbereich 295. Man kann sagen, daß ein solcher Motor ein impedanzgeschützter Motor ist. Im Gegensatz dazu ist der Motor gemäß Fig. 19 kein impedanzgeschützter Motor, weil der sichere Arbeitsbereich 295 sehr schmal ist, und es muß deshalb dafür gesorgt werden, daß der Motor ständig in diesem sicheren Arbeitsbereich 295 arbeitet.

Beim Regler gemäß Fig. 16 kann erfindungsgemäß mit Hilfe der Stellwertbegrenzung 282 eine sichere softwaremäßige Strombegrenzung verwirklicht werden, welche den Motor 32 in diesem sicheren Bereich 295 hält.

Hierzu berechnet man in S114 (Fig. 16) die Werte SW_MAX und SW_MIN als Funktion der augenblicklichen Drehzahl n, wie folgt:

$$SW\_MAX: = U_{Emax} (n) \quad \ldots (14)$$

$$SW\_MIN: = U_{Emin} (n) \quad \ldots (15)$$

Je nach der geforderten Präzision können diese Funktionen gemäß Gleichung (14) und (15) sehr verschiedene Strukturen haben. Nachfolgend werden vereinfachte Ausführungsbeispiele angegeben, bei denen Näherungswerte für SW_MIN und SW_MAX berechnet werden. Die exakten Werte für SW_MAX und SW_MIN werden durch eine analoge Strombegrenzung mittels der Anordnungen nach den Fig. 5 bis 7 festgelegt, wobei der Strom $i_2$ tatsächlich gemessen wird.

Die Anordnung gemäß Fig. 19 kann jedoch auch ohne Messung des Stromes $i_2$ realisiert werden, denn nach den Gleichungen (12) und (13) sind die Kennlinien 294 und 296 nur eine Funktion der Drehzahl n des Motors 32 (und nicht des Stromes $i_2$), und da die Drehzahl n dem $\mu$C 23 aus den Hallsignalen HS1, HS2, HS3 bekannt ist, vgl. Gleichung (4), kann der $\mu$C 23 für jede Motordrehzahl n den zulässigen Wert $U_{Emax}$ und $U_{Emin}$ berechnen. Eine derartige Lösung ist in Fig. 30 dargestellt.

Wird der zulässige Wert $U_{Emax}$ überschritten, so bedeutet dies, daß das Tastverhältnis PWM am Ausgang 157 des $\mu$C 23 (Fig. 30) zu hoch ist, und dieses Tastverhältnis wird dann durch die Software des Reglers entsprechend reduziert. Wird der zulässige Wert $U_{Emin}$ unterschritten, so wird das Tastverhältnis PWM am Ausgang 157 (Fig. 30) durch den $\mu$C 23 entsprechend erhöht, da es zu niedrig ist. Dadurch wird der Strom $i_2$ im Motor 32 so begrenzt, daß der Motor 32 stets innerhalb der Grenzen läuft, die durch den Bereich 295 in Fig. 19 vorgegeben sind.

Der große Vorteil ist, daß in diesem Fall die analogen Strombegrenzungen gemäß den Figuren 8 bis 10 entfallen können, d.h. der $\mu$C 23 enthält sozusagen ein synthetisches Modell des Motors 32 (mit der Motorkonstanten ke, den zulässigen Strömen Imax (Antrieb) bzw. -Imax (Bremsen), und dem Wicklungswiderstand Ri), und anhand dieser Werte und der - ständig gemessenen - Drehzahl n berechnet der $\mu$C 23 einen Stellwert für den Motor 32, z.B. das Tastverhältnis PWM in Fig. 30. Dieser Stellwert kann dann direkt zur Ansteuerung des Motors 32 dienen und wird direkt als Tastverhältnis dem Eingang 180 der Fig. 11 zugeführt. Dadurch entfallen bei Fig. 30 die analogen Strombegrenzungsanordnungen gemäß den Figuren 8 bis 10.

Ein solches synthetisches Modell des Motors 32 kann dann auch weitere Variablen berücksichtigen, z.B. die Wärmekapazität des Motors 32, d.h. der Bereich 295 in Fig. 19 kann kurzzeitig auch verlassen werden, solange nicht die Gefahr besteht, daß der Rotor 110 entmagnetisiert wird, und dadurch wird z.B. ein rascherer Anlauf des Motors 32 ermöglicht.

Die Motorkonstante $k_e$, der maximal zulässige Strom $I_{max}$ beim Antrieb und der maximal zulässige Strom $-I_{max}$ beim Bremsen, sowie der Wert $R_i$ des Wicklungswiderstands 121 können entweder in dem Programm des $\mu$C 23 als konstante Werte gespeichert oder von außen in den Regler eingegeben werden, z.B. durch Veränderung entsprechender Werte in einem EEPROM, das nicht dargestellt ist. Hierzu wird verwiesen auf die deutsche Patentanmeldung 198 26 458.5 vom 13. Juni 1998.

**Fig. 20** zeigt eine mögliche Ausführung S114' des Schrittes S114 des Reglers aus Fig. 16. Für die Berechnung von SW_MIN und SW_MAX werden die Gleichungen (13), (15) bzw. (12), (14) verwendet.

**Unterstützende Strombegrenzung durch Software**

**Fig. 21** zeigt ein Diagramm wie in Fig. 19, in dem die induzierte Spannung $U_i$ 122 über der Drehzahl n aufgetragen ist. Die Linien $U_{E,min}$ 296 und $U_{E,max}$ 294 entsprechen denen aus Fig. 19 und begrenzen also den Bereich 295 um $U_i$, in dem ein sicherer Betrieb des Motors 32 möglich ist.

Für beide Drehrichtungen des Motors 32 wird nur ein Diagramm mit dem Absolutwert der Drehzahl n benötigt, da z.B. bei dreiphasigen Motoren der Unterschied zu der anderen Drehrichtung nur in der anderen Art der Kommutierung liegt. Die Berechnung der Drehzahl n aus der Hallzeit t_HALL (Fig. 12) ist unabhängig von der Drehrichtung.

Die Berechnung von SW_MIN und SW_MAX in Fig. 20 enthält Multiplikationen und gegebenenfalls auch Divisionen, welche in dem verwendeten $\mu$C 23 einen hohen Rechen- und damit auch Zeitaufwand benötigen.

Zur Reduzierung des Rechenaufwands in der Stellwertbegrenzung 282 in Fig. 16 ist es zum Beispiel möglich, den Stellwert erstens nur nach unten zu begrenzen, und zweitens eine einfachere Berechnung zu verwenden.

Fig. 21 enthält eine Gerade 298, welche durch den Nullpunkt des Koordinatensystems geht. Die Gerade 298 erreicht bei der maximalen Leerlaufdrehzahl n_max z.B. die halbe maximale induzierte Spannung $U_{max}/2$. Diese Gerade stellt eine Begrenzung des Stellwerts SW_MIN dar, die wirksam wird, wenn der Motor 32 bremst, also als Generator arbeitet, d.h. beim Bremsbetrieb kann der Stellwert nicht unter diesen Wert sinken, wodurch der Bremsstrom begrenzt wird.

Fig. 22 zeigt das Flußdiagramm einer Stellwertbegrenzung 282', welche im Gegensatz zu der Stellwertbegrenzung 282 aus Fig. 16 den Stellwert SW nur nach unten in Richtung SW_MIN' begrenzt. Die Schritte S120 und S122 aus Fig. 16 entfallen also.

Die Berechnung des minimalen Stellwerts, SW_MIN in S114" geschieht nach der Geraden 298 aus Fig. 21 mit der Formel

$$SW\_MIN := (1/2 \cdot n/n\_max) \; U_{Nenn} / U_B \qquad ... (16)$$

$U_{Nenn}$ ist die Nennspannung des Motors, und n_max die maximale Leerlaufdrehzahl bei der Nennspannung UNenn.

So erhält man eine einfache Stellwertbegrenzung nach unten, die eine Hardwarestrombegrenzung wie in Fig. 7 unterstützt.

Eine Kombination aus Hardware- und Softwarestrombegrenzung hat einen weiteren Vorteil. Mit der Softwarestrombegrenzung kann der maximale Bremsstrom $i_2$' so eingestellt werden, daß er etwas über dem maximal erlaubten Strom liegt. Die Hardwarestrombegrenzung erkennt diesen zu großen Strom $i_2$' und begrenzt diesen dann weiter. So kann man sichergehen, daß der Motor 32 die maximale Leistung erreicht, und gleichzeitig werden Toleranzen des Motors 32 aufgefangen. Auch ergeben sich so sehr schnelle Regelvorgänge.

Für die negative Strombegrenzung muß, wie bei Fig. 6 erläutert, ein minimales Tastverhältnis SW_MIN_CONST aufrechterhalten werden, um eine Messung des Bremsstroms $i_2$' zu ermöglichen. Da in Fig. 21, 22 ein drehzahlabhängiger minimaler Stellwert SW_MIN (n) eingehalten wird, vergleiche die Gerade 298, entfällt der in Fig. 6 erwähnte konstante minimale Stellwert SW_MIN_CONST. Hierdurch wird der Regelbereich des Motors 32 erweitert.

Eine weitere Möglichkeit zur Vereinfachung der Berechnung von SW_MIN und SW_MAX besteht darin, die Stellwerte SW_MIN und SW_MAX in Abhängigkeit von der Drehzahl n in einer Tabelle abzuspeichern, und ggf. zwischen den Tabellenwerten zu interpolieren.

Noch eine Möglichkeit zur Vereinfachung der Berechnung von SW_MIN und SW_MAX besteht darin, den Wert $U_{Nenn}$ / $U_B$ als konstanten Faktor anzusehen, z.B. als den Wert 1. Diese Vereinfachung ist möglich, wenn der Wert $U_B$ keine großen Abweichungen von $U_{Nenn}$ hat. Dadurch wird eine Division und damit Rechenzeit gespart.

Weitere Rechenzeit wird dadurch eingespart, daß Multiplikationen durch Verschiebeoperationen ersetzt werden. Durch jedes Verschieben einer Variablen um eine Stelle nach links wird eine Multiplikation mit 2 erreicht, ein Verschieben um eine Stelle nach rechts bewirk eine Division durch 2.

**Überwachung der Betriebsspannung**

**Fig. 23** zeigt ein Unterprogramm UB_TEST, welches zur Überwachung der Betriebsspannung $U_B$ dient, die in Fig. 1 am Anschluß 76 gemessen werden kann. Liegt $U_B$ außerhalb eines erlaubten Bereichs, so wird die Vollbrückenschaltung 78 entsprechend beeinflußt, damit die an die an dem Zwischenkreis 73, 74 angeschlossenen Bauteile, wie z.B. die Leistungstransistoren 80 bis 85, die Freilaufdioden 90 bis 95, der Kondensator 75 und die Bauteile 77 (Fig. 1) nicht zerstört werden.

Das Unterprogramm UB_TEST wird durch den Funktionsmanager 603 (Fig. 25) aufgerufen, wenn eine Variable FCT_UBT auf 1 gesetzt ist. Die Anforderung des Unterprogramms UB_TEST geschieht in der Interruptroutine TIMERØ_ ROUT in S201 (Fig. 13).

In S302 wird die Variable FCT_UBT wieder auf 0 zurückgesetzt.

In S304 wird über einen A/D-Wandler (im µC 23) abgefragt, wie hoch die Spannung am Eingang 68 des µC 23 ist, und das Resultat wird als digitaler Wert in der Variablen U_AD gespeichert.

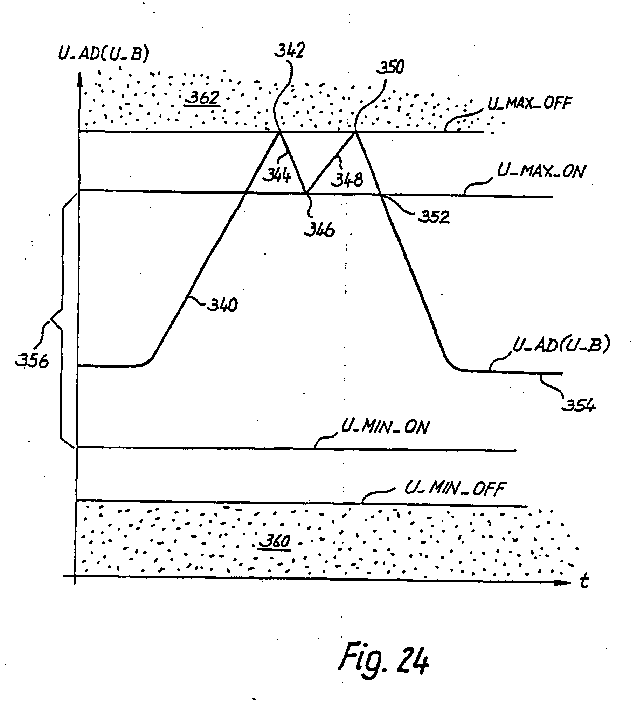

**Fig. 24** zeigt beispielhaft einen zeitlichen Verlauf der digitalen Größe U_AD, die der analogen Größe $U_B$ (= Betriebsspannung des Motors 32) entspricht. Der Wert U_AD kann zu klein werden, weil z.B. bei einem Elektrofahrzeug der Akkumulator entladen ist. Dann sinkt die Betriebsspannung unter einen unteren Grenzwert U_MIN_OFF, und der Motor 32 muß automatisch abgeschaltet werden. Steigt dann diese Spannung über einen höheren unteren Grenzwert U_MIN_ON an, so kann der Motor 32 wieder eingeschaltet werden. Hierdurch erhält man eine untere Schalthysterese.

Beim Bremsen kann die Größe U_AD zu groß werden, weil der Motor 32 generatorisch Energie in den Kondensator 75 zurückliefert, so daß dort die Spannung $U_B$ ansteigt, weil diese Energie von den Verbrauchern 77 nicht verbraucht werden kann. Ein zu hoher Anstieg der Spannung $U_B$ muß verhindert werden, da sonst die Bauteile 77 zerstört werden könnten.

Bei 340 ist in Fig. 24 ein Anstieg der Größe U_AD dargestellt, der durch einen Bremsvorgang des Motors 32 entsteht. Bei 342 wird ein oberer Schwellwert U_MAX_OFF überschritten, und alle Transistoren 80 bis 85 des Motors 32 werden gesperrt. Dadurch sinkt bei 344 der Wert U_AD und erreicht bei 346 einen niedrigeren Schwellwert U_MAX_ ON, bei dem die Kommutierung der Transistoren 80 bis 85 wieder normal eingeschaltet wird, so daß bei 348 die Größe U_AD wieder ansteigt. Bei 350 werden die Transistoren 80 bis 85 erneut gesperrt, so daß bei 352 der Wert U_AD erneut sinkt, und bei 352 wird erneut der Schwellwert U_MAX_ON erreicht, wo wieder die Kommutierung des Motors 32 eingeschaltet wird. Da jetzt bei diesem Beispiel der Bremsvorgang beendet ist, weil der Motor seine Solldrehzahl n_s erreicht, fällt der Wert U_AD weiter bis auf den "normalen" Wert 354 von U_AD, der im "sicheren Bereich" 356 liegt.

In Fig. 24 ist mit 360 ein "verbotener Bereich" mit zu niedriger Betriebsspannung $U_B$ bezeichnet, und mit 362 ein verbotener Bereich mit zu hoher Betriebsspannung $U_B$, wie er sonst beim Bremsen auftreten könnte.

Das Programm gemäß Fig. 23 dient zur Realisierung der soeben beschriebenen Abläufe. In den Schritten S306 bis S308 wird überprüft, ob die Größe U_AD außerhalb des erlaubten Bereichs zwischen U_MIN_OFF und U_ MAX_OFF liegt. Ist dies der Fall, so wird nach S310 gesprungen, ansonsten nach S320.

In S310 wird anhand der Variablen U_OFF überprüft, ob die Endstufe 78 bereits abgeschaltet ist. Ist dies der Fall, also U_OFF = 1, so kann sofort zum Ende in S330 gesprungen werden. Ansonsten wird in S312 U_OFF auf 1 gesetzt, und alle Signale EN1, EN2, EN3 (Fig. 8) werden auf HIGH gesetzt, so daß alle Brückentransistoren 80 bis 85 (Fig. 1) nichtleitend gesteuert werden. Da die in den Wicklungen 115, 116, 117 induzierte Spannung 78 bei geöffneten Leistungsschaltern 80 bis 85 unter der Spannung $U_B$ am Kondensator 75 liegt, sind alle Freilaufdioden 90 bis 95 gesperrt, und es kann kein Strom und damit auch keine Leistung aus dem Motor 32 in den Zwischenkreis 73, 74 fließen. Der Motor 32 ist also "freigeschaltet", d.h. er nimmt weder Leistung auf, noch gibt er Leistung ab.

In S320 bis S322 wird überprüft, ob sich U_AD in dem erlaubten Bereich 356 befindet. Durch diesen erlaubten Bereich 356, der kleiner ist als der nichterlaubte Bereich, welcher durch die Schritte S306 und S308 definiert ist, erhält man eine Hysterese der Strombegrenzung, was die Arbeitsweise des Motors verbessert. Ist keine Hysterese notwendig, so wird S324 direkt an die Alternative "N" von S308 angehängt, und die Schritte S320, S322 können entfallen.

Befindet sich U_AD in dem erlaubten Bereich 356, so wird von S320 bzw. S322 nach S324 gesprungen; ansonsten wird das Unterprogramm UB_TEST in S330 beendet.

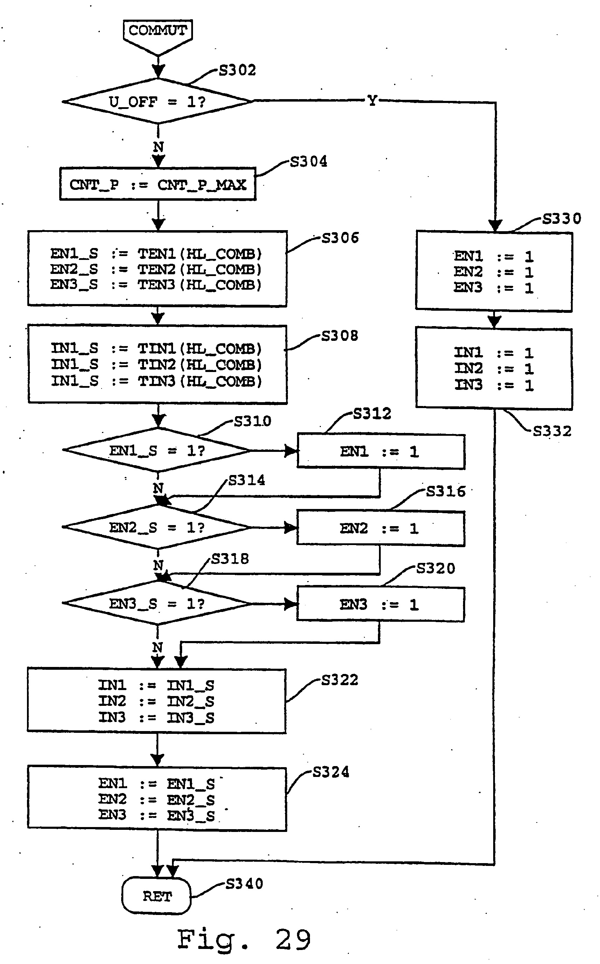

In S324 wird überprüft, ob U_OFF schon 0 war, die Endstufe 78 also bereits normal kommutiert wurde. War U_OFF = 0, so wird zum Ende S330 gesprungen, und sonst wird in S326 die Variable U_OFF auf 0 gesetzt, und bei COMMUT wird die Endstufe 78 gemäß der Tabelle in Fig. 2 normal in Abhängigkeit von den Hallsignalen HS1, HS2, HS3 kommutiert. Dies wird nachfolgend in Fig. 29 beschrieben. Dabei ist es auch möglich, den Beginn der Kommutierung mit zunehmender Drehzahl in Richtung nach früh zu verlegen, vgl. hierzu beispielhaft die DE 197 00 479 A1.

Auf diese Weise kann der Motor 32 beim Bremsen, also dann, wenn er die vom Drehzahlregler vorgegebene gewünschte Drehzahl n_s überschreitet, Energie generatorisch in den Kondensator 75 (Fig. 1) zurückliefern, ohne daß dabei die Spannung $U_B$ an diesem Kondensator unzulässige Werte annehmen kann.

Ebenso wird sichergestellt, daß der Motor 32 abgeschaltet wird, wenn seine Betriebsspannung $U_B$ unter einen zulässigen Wert U_MIN_OFF absinkt, wodurch Fehlfunktionen des Motor 32 vermieden werden. Dies ist besonders wichtig, wenn ein solcher Motor aus einem - nicht dargestellten - Akkumulator betrieben wird, den man sich in Fig. 1 an der Stelle des Gleichrichters 72 denken muß, wie dem Fachmann geläufig ist.

In dem Unterprogramm COMMUT (Fig. 29) wird die Endstufe 78 in Abhängigkeit von den Hallsignalen HS1, HS2, HS3 kommutiert, falls keine weiteren Störungen vorliegen. Das Unterprogramm COMMUT, das auch allgemein zur Kommutierung dient, berücksichtigt bei der Kommutierung den Wert von U_OFF. Hat U_OFF den Wert 1, so bleiben alle Signale EN1, EN2, EN3 (Fig. 8) auf HIGH, vgl. S330 in Fig. 29.

**Funktionsmanager**

**Fig. 25** zeigt ein Flußdiagramm mit einer möglichen Ausführungsform des in dem µC 23 ablaufenden Hauptprogramms in Form eines sogenannten Funktionsmanagers.

Das Hauptprogramm hat die Aufgaben, auf Ereignisse wie z.B. der Änderung eines der Rotorstellungssignale HS1, HS2 oder HS3 zu reagieren, ferner jeder Funktion bei Bedarf Ressourcen, insbesondere Rechenzeit, zur Verfügung zu stellen, und bei der Vergabe der Ressourcen Prioritäten zu beachten.

Nach dem Einschalten des Motors 32 wird in dem µC 23 ein interner Reset ausgelöst. In S600 erfolgt die Initialisierung des µC 23. Ggf. folgen weitere zeitkritische Abläufe, wie bei S601 angedeutet.

Danach erfolgt ein Sprung in den Funktionsmanager 603, der in S602 beginnt. Der Funktionsmanager 603 regelt den Ablauf der einzelnen Unterprogramme und bestimmt deren Prioritäten.

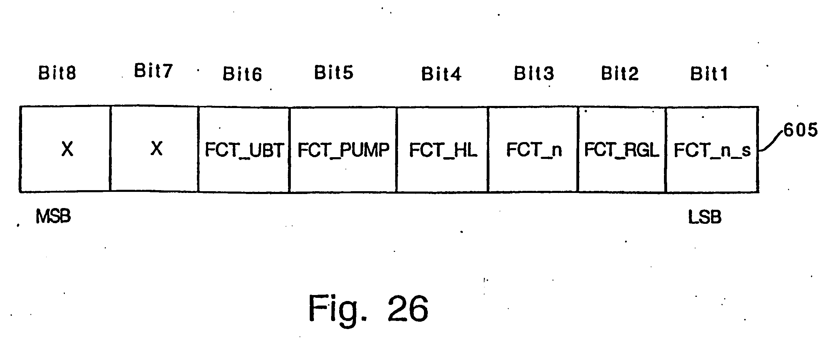

**Fig. 26** zeigt ein beispielhaftes Funktionsregister 605, in dem für jedes der Unterprogramme S604, S610, S614, S618 und S622 ein Bit reserviert ist.

In diesem Beispiel ist das Funktionsregister 605 1 Byte groß, und es sind, von dem niederwertigsten Bit (LSB) beginnend, die folgenden Anforderungsbits für die unten erklärten anforderbaren Funktionen definiert:

- Bit1: FCT_n_s für die Berechung der Solldrehzahl n_s aus einem analogen Spannungswert am Eingang 48 des µC 23,
- Bit2: FCT_RGL für eine Regelroutine beliebiger Art,
- Bit3: FCT_n für die Berechung der Istdrehzahl n,
- Bit4: FCT_HL für die Berechung der Hallzeit t_HALL (vgl. Fig. 12),
- Bit5: FCT_PUMP für das Pumpen durch den µC 23 (vgl Fig. 23),
- Bit6: FCT_UBT für die Überwachung der Betriebsspannung $U_B$.

Die restlichen Bits sind für zusätzliche anforderbare Funktionen reserviert, die bei Bedarf in den Funktionsmanager 603 eingefügt werden können.

Soll eine bestimmte anforderbare Funktion durch eine andere Funktion oder eine Interruptroutine angefordert werden, so wird das Bit der anzufordernden Funktion auf 1 gesetzt, z.B. FCT_UBT := 1. Wenn der Funktionsmanager 603 bei einem auf diese Anforderung folgenden Durchlauf keine andere anforderbare Funktion mit höherer Priorität findet, so wird in diesem Fall die Funktion zur Überwachung der Betriebsspannung ausgeführt, die in Fig. 23 dargestellt ist.

Ist eine angeforderte Funktion abgearbeitet, so setzt sie ihr Bit in dem Funktionsregister 603 wieder auf 0, z.B. FCT_UBT := 0 in S302 von Fig. 23.

In Fig. 25 wird nach S602 in einer vorbestimmten Reihenfolge, von der wichtigsten anforderbaren Funktion ausgehend, geprüft, ob deren Anforderungsbit gesetzt ist. Ist dies bei einer Funktion der Fall, so wird diese ausgeführt, und daraufhin wird wieder zum Schritt S601 gesprungen. Die Reihenfolge der Überprüfung des Funktionsregisters 605 gibt die Priorisierung der anforderbaren Funktionen vor. Je höher eine solche Funktion in dem Funktionsmanager 603 steht, desto höher ist ihre Priorität.

In S602 wird überprüft, ob das Anforderungsbit FCT_PUMP für das Pumpen gesetzt ist, also den Wert 1 hat. Ist es gesetzt, so wird nach S604 gesprungen, und die Pumpfunktion (Beschreibung vor Fig. 15) wird ausgeführt. Vor der Beendigung setzt die Pumpfunktion ihr Anforderungsbit FCT _PUMP wieder auf Null zurück. Danach erfolgt ein Sprung zurück zu Schritt S601.

War in S602 FCT_PUMP nicht gesetzt, so wird in S608 überprüft, ob FCT_UBT gesetzt ist. Ist dies der Fall, so wird die Funktion S610 (Fig. 23, 24) zur Überwachung der Betriebsspannung $U_B$ aufgerufen.

In gleicher Weise wird bei gesetztem FCT_n von S612 aus die Berechungsfunktion S614 der Istdrehzahl n (Fig. 12) aufgerufen. Bei gesetztem FCT_RGL (S616) wird die Reglerfunktion S618 (Fig. 16) und bei gesetztem FCT_n_s (S620) die Berechnungsfunktion der Solldrehzahl n_s (Fig. 8) aufgerufen.

Waren keine der in S602 bis S620 überprüften Bits gesetzt, so wird von S620 wieder nach S601 gesprungen, d.h. S601 wird bei jedem Durchlauf ausgeführt.

Fig. 25 zeigt auch bei 624 symbolisch einen Hall-Interrupt, der die höchste Priorität L1 (Level 1) hat. Ein Hall-Interrupt hat diese hohe Priorität, weil die genaue Erfassung der Hall-Signale für einen ruhigen Lauf des Motors 39 sehr wichtig ist. Er unterbricht alle Prozesse des Funktionsmanagers 603, wie durch einen Pfeil 626 symbolisiert.

Unter dem Hall-Interrupt 624 ist bei 628 ein TIMERØ-Interrupt des Timers TIMERØ dargestellt. Dieser hat eine niedrigere Priorität L2 und unterbricht alle Prozesse unter ihm, wie durch den Pfeil 630 angedeutet.

Wenn Hall-Interrupt und Timer-Interrupt gleichzeitig angefordert würden, würden sie nach der Reihenfolge ihrer Priorität abgearbeitet.

Die nächstniedere Priorität L3 hat die Pumpfunktion S604, da das Pumpen für eine sichere Kommutierung des Motors wichtig ist.

Die nächstniedere Priorität L4 hat die Spannungsüberwachungsfunktion S610, die ein Zerstören des Motors 32 durch eine zu hohe Betriebsspannung verhindert.

Die nächstniedere Priorität L5 hat die Berechnungsfunktion S614 der Istdrehzahl n. Die Istdrehzahl n ändert sich häufiger als die Solldrehzahl n_s.

Die nächstniedere Priorität L6 hat die Reglerfunktion S618, und die niedrigste Priorität hat die Berechnungsfunktion S622 der Solldrehzahl n_s.

Ggf. kann man aber auch die Reihenfolge der Schritte S602 bis S620, und damit deren Priorität, vertauschen.

Die Funktion S601, welche z.B. die Kommunikation zwischen dem Motor 32 und einem (nicht dargestellten) Desktop-Computer steuert, hat, falls vorhanden, eine Priorität, die zwischen L2 und L3 liegt.

Auf diese Weise gelingt es, die verschiedenen "Bedürfnisse" des Motors 32 in eine vorgegebene Hierarchie einzuordnen und die Ressourcen des $\mu C$ 23 optimal für den Betrieb des Motors zu nutzen.

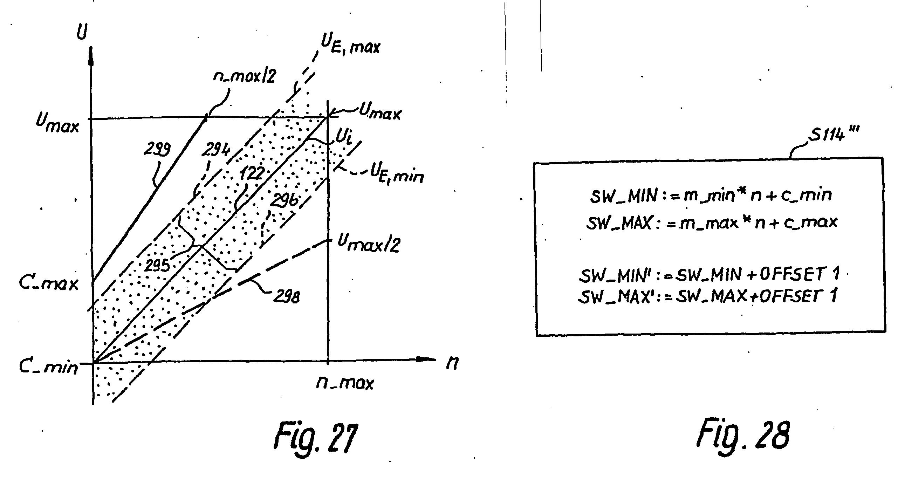

Fig. 27 zeigt ein Diagramm wie in Fig. 19 und 21, in dem die induzierte Spannung $U_i$ 122 über der Drehzahl n aufgetragen ist. Die Linien $U_{E,min}$ 296 und $U_{E,max}$ 294 entsprechen denen aus Fig. 19 und begrenzen also den Bereich 295 um $U_i$, in dem ein sicherer Betrieb des Motors 32 möglich ist.

Die Berechnung von SW_MIN und SW_MAX in Fig. 20 enthält Multiplikationen und gegebenenfalls auch Divisionen, welche in dem verwendeten $\mu C$ 23 einen hohen Rechen- und damit auch Zeitaufwand benötigen.

Zur Reduzierung des Rechenaufwands in der Stellwertbegrenzung S113 in Fig. 16 wird eine einfachere Berechnung verwendet. Die obere Begrenzungslinie 299 und die untere Begrenzungslinie 298 werden als Geraden dargestellt, die jeweils einen Offset c_min bzw. c_max an der Stelle n = 0 U/min haben. In diesem Beispiel ist c_min = 0.

Die Gerade 298 erreicht wie in Fig. 21 bei der maximalen Leerlaufdrehzahl n_max z.B. die halbe maximale induzierte Spannung $U_{max}/2$. Diese Gerade 298 stellt eine Begrenzung des Stellwerts SW_MIN dar. Die Gerade 299 erreicht z.B. bei der halben maximalen Drehzahl n_max/2 die maximale Spannung $U_{max}$. Sie stellt eine Begrenzung des Stellwerts SW_MAX dar.

Fig. 28 zeigt eine mögliche Ausführung S114"' des Schrittes S114 des Reglers aus Fig. 16 für die Geraden aus Fig. 27. Es wird eine allgemeine Geradengleichung gewählt.

$$SW\_MIN := m\_min * n + c\_min$$

$$SW\_MAX := m\_max * n + c\_max$$

m_min ist die Steigung der Geraden 298 und m_max die Steigungen der Geraden 299. c_min ist der Ordinatenabschnitt der Geraden 298 (bei diesem Beispiel ist c_min = 0) und c_max der Ordinatenabschnitt der Geraden 299.

Durch die freie Wahl der Konstanten c_max, c_min, m_max, m_min kann das Verhalten des Motors einfach verändert werden, z.B. durch Ändern gespeicherter Werte.

c_min kann auch negativ gewählt werden. c_max kann niedrig gewählt werden, um den Motor 32 langsamer anlaufen zu lassen, und so ein Überschwingen beim Erreichen der Solldrehzahl n_s zu vermeiden. Ebenso kann z.B. die Gerade 299 in den Bereich zwischen der Geraden 294 und der Geraden 122 gelegt werden, um eine sehr sichere Strombegrenzung zu erhalten.

Fig. 29 zeigt das Unterprogramm COMMUT, welches die Kommutierung der Endstufe 78 (Fig. 1) gemäß der Kommutierungstabelle aus Fig. 2 mit Hilfe der Ansteuerschaltungen 50, 52, 54 (Fig. 8) durchführt. Bei einem Motor ohne Zündwinkelverschiebung wird dieses Unterprogramm z.B. von der Hall-Interruptroutine aufgerufen.

In S302 wird überprüft, ob aufgrund der Spannungsüberwachung UB_TEST (Fig. 23) die Endstufe ausgeschaltet wurde (U_OFF = 1). Dies bedeutet, daß die Spannung am Zwischenkreis 73, 74 zu hoch oder zu tief ist.

In diesem Fall wird nach S330 gesprungen. In S330 werden alle Treiberbausteine 200 deaktiviert. Dies geschieht durch Setzen der Ausgänge EN1, EN2, EN3 auf 1.

In S332 werden die Signale IN1, IN2, IN3 auf 1 gesetzt. Dies hat zwar bei deaktivierten Treiberbausteinen 200 keine Auswirkung, der Zustand der Signale IN1, IN2, IN3, der gespeichert bleibt, ist jedoch dadurch für nachfolgende Vorgänge definiert.

Daraufhin wird an das Ende S340 gesprungen.

War in S302 U_OFF = 0, d.h. die Spannung am Zwischenkreis 73, 74 ist normal, so geschieht eine normale Kommutierung nach der Kommutierungstabelle aus Fig. 2.

In S304 wird der Zähler CNT_P, der für die Pumpüberwachung aus Fig. 13 verwendet wird, auf CNT_P_MAX gesetzt, da im folgenden kommutiert wird.

In S306 werden die Sollwerte EN1_S, EN2_S, EN3_S für die Signale EN1 bis EN3 entsprechend der Kombination HL_COMB der Hallsignale HS1, HS2, HS3 aus der Tabelle in Fig. 2 geladen. Die Tabellenwerte aus Fig. 2 werden mit TEN1, TEN2 und TEN3 bezeichnet. Wenn sich z.B. der Rotor 110 in der Winkelstellung 0 ° ... 60 °el. befindet, so ist die Kombination HL_COMB der Hallsignale (HS1 = 1, HS2 = 0, HS3 = 1), und es werden die folgenden Werte geladen: EN1_S = 0, EN2_S = 0, EN3_S = 1.

Ebenso werden in S308 die Sollwerte IN1_S, IN2_S, IN3_S für die Signale IN1 bis IN3 entsprechend der Kombination HL_COMB der Hallsignal HS1, HS2, HS3 aus der Tabelle in Fig. 2 geladen. Die Tabelle für die IN-Werte wird mit TIN1, TIN2, TIN3 bezeichnet. Für das Beispiel aus S306 ergibt sich IN1_S = 1, IN2_S = TRISTATE, IN3_S = 1 für die Winkelstellung 0 ° ... 60 °el.

Vor der Kommutierung waren zwei der Treiberbausteine aktiviert und ein Treiberbaustein war deaktiviert. Z.B. waren vor der Kommutierung in Fig. 8 der Baustein 52 und 54 aktiviert, und der Baustein 50 war deaktiviert. Nach der Kommutierung ist z.B. der Baustein 54 deaktiviert, und die Bausteine 50 und 52 sind aktiviert.

Die Schritte S310 bis S320 dienen zum Ausschalten des Treiberbausteins, der vor der Kommutierung aktiviert war, und nach der Kommutierung deaktiviert sein soll, im obigen Beispiel der Baustein 54. Der Baustein, der vor und nach der Kommutierung aktiviert ist, bleibt ständig aktiviert, um Leistungsverluste im Motor 32 zu vermeiden.

In Fig. 2 sind in den Spalten EN1, EN2, EN3 jeweils die Felder mit einem Rahmen 740 versehen, bei denen der jeweilige Treiberbaustein zwei aufeinanderfolgende Winkelbereiche aktiviert ist. So ist z.B. bei

Deshalb wird in S310 überprüft, ob der Sollwert EN1_S für das Signal EN1 1 ist, ob also EN1 nach der Kommutierung ausgeschaltet werden soll. In diesem Fall wird EN1 in S312 auf 1 gesetzt, und der Treiberbaustein des Brückenzweigs des Wicklungsanschlusses L1 wird deaktiviert. War EN1 vor der Kommutierung deaktiviert, so hat ein neuerliches Deaktivieren keine Auswirkung.

In S314 bis S320 geschieht das gleiche für die Brückenzweige der Wicklungsanschlüsse L2 und L3.

In S322 werden die Signale IN1, IN2 und IN3 auf die Sollwerte IN1_S, IN2_S und IN3_S gesetzt.

In S324 werden die Signale EN1, EN2 und EN3 auf die Sollwerte EN1_S, EN2_S und EN3_S gesetzt. Da die Treiberbausteine, die nach der Kommutierung deaktiviert sein sollen, bereits in S310 bis S320 deaktiviert wurden, bewirkt S324 ein Einschalten des Treiberbausteins, der zuvor ausgeschaltet war. Der andere Treiberbaustein, der sowohl vor der Kommutierung als auch nach der Kommutierung eingeschaltet ist, wurde ja in S310 bis S320 nicht ausgeschaltet, um Leistungsverluste im Motor 32 zu vermeiden, die bei einer Stromunterbrechung auftreten würden.

In S340 wird das Unterprogramm COMMUT beendet.

Um dem Motor 32 ggf. beide Drehrichtungen zu erlauben, muß eine zweite Kommutierungstabelle für die andere Drehrichtung analog zu Fig. 2 gegeben sein. In vielen Fällen, z.B. bei Radiallüftern, wird aber nur der Betrieb in einer Drehrichtung gefordert. Der Betrieb mit einer Kommutierungstabelle für die umgekehrte Richtung ist für den Fachmann problemlos möglich und wird deshalb nicht weiter beschrieben.

Fig. 30 zeigt eine Übersicht über ein weiteres Ausführungsbeispiel eines erfindungsgemäßen elektronisch kommutierten Motors 32, welches ähnlich zu Fig. 8 ist. Gleiche oder gleichwirkende Teile erhalten die gleichen Bezugszeichen und werden gewöhnlich nicht nochmals erwähnt.

In Fig. 30 ist die Hardwarestrombegrenzung durch die Strombegrenzer 131 und 161 entfallen. Diese wird vollkommen durch das in dem μC 23 ablaufende Programm übernommen, was durch die Darstellung 199 symbolisch angedeutet ist. Hierbei wird z.B. eine Regelung analog zu Fig. 16 verwendet, bei der die Berechnung von SW_MIN und SW_MAX wie in Fig. 27 und 28 vorgenommen wird, wobei die Geraden 298 und 299 auf den Geraden $U_{Emin}$ 296 und $U_{Emax}$ 294 liegen. Der Offset OFFSET1 aus Fig. 28 ist hierbei 0, da der PWM-Generator 182 entfallen ist.

Das für die wechselseitige Taktung benötigte PWM-Signal PWM 181 wird, da keine Hardwarestrombegrenzung 131, 161 mehr verwendet wird, direkt von dem Ausgang 157 des μC 23 in die Ansteuerschaltungen 50, 52 und 54 eingespeist und bewirkt auch die erforderliche Strombegrenzung, so daß der Motor 32 nur in dem sicheren Bereich 295 betrieben werden kann. Eine Messung des Motorstroms entfällt hier. Sehr vorteilhaft ist, daß der Wert des Stromes abhängig von der Drehzahl begrenzt werden kann, um z.B. einen sanften Anlauf zu erhalten.

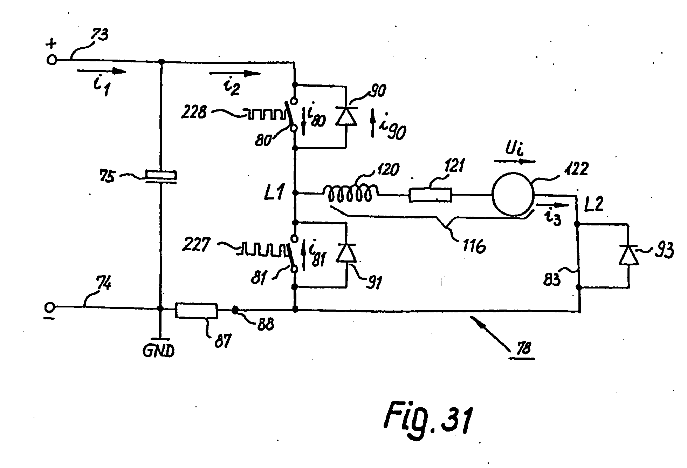

**Fig. 31** zeigt ein weiteres elektrisches Ersatzschaltbild wie in Fig. 3, welches nur Teile der Vollbrückenschaltung 78 der Fig. 1 zeigt. Gleiche oder gleichwirkende Teile erhalten die gleichen Bezugzeichen und werden gewöhnlich nicht nochmals erwähnt.

In Fig. 31 ist anstelle des oberen Leistungsschalters 82, der bei Fig. 3 geschlossen war, der untere Leistungsschalter 83 geschlossen. Weiterhin liegt das getaktete Ansteuerungssignal 228 nun an dem oberen Leistungsschalter 80, und das getaktete Ansteuerungssignal 227 liegt an dem unteren Leistungsschalter 81.

Bei dieser Art der Bestromung der Endstufe 78 liegt der Hauptunterschied darin, daß der Leistungsschalter, der für einen bestimmten Winkelbereich des Rotors 110 fest eingeschaltet ist, in Fig. 31 der untere Leistungsschalter 83 ist, während es in Fig. 3 der obere Leistungsschalter 82 war. Dementsprechend ist auch die Ansteuerung der getakteten Leistungsschalter 80 und 81 vertauscht, und es muß eine angepaßte Tabelle (Fig. 2) für die Ansteuerlogik verwendet werden.

Für die Erzeugung der Signale 227, 228 ergibt sich hierbei keine Änderung, so daß sich alle zuvor erwähnten Merkmale des erfindungsgemäßen Motors in gleicher Weise für dieses Ausführungsbeispiel verwenden lassen.

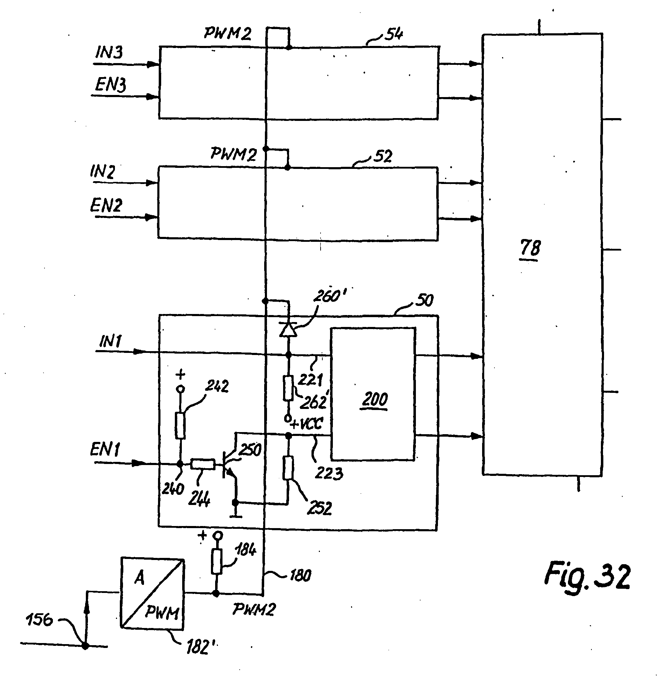

Eine notwendige Änderung der Signale IN1, IN2, IN3 ist in Fig. 32 beschrieben.

Ein Vorteil dieser Schaltung besteht darin, daß durch die Verwendung des unteren Leistungsschalters 83 auch der Brückenzweig von L2 gepumpt wird. Im übrigen ist die Funktion dieselbe, der Strom $i_3$ fließt - verglichen mit Fig. 3 - in der umgekehrten Richtung.

Fig. 32 zeigt eine Variante zu Fig. 8. Die Schaltung nach Fig. 32 dient zur Ansteuerung der Variante nach Fig. 31. Dargestellt ist ein veränderter Ausschnitt aus Fig. 8. Alle übrigen Teile entsprechen denen aus Fig. 8 und sind nicht dargestellt.

Die Zenerdiode 186 aus Fig. 8 ist entfernt worden, die Diode 260 aus Fig. 8 ist umgekehrt gepolt und hat nun das Bezugzeichen 260', und der Widerstand 262' ist nach +Vcc geschaltet, während der Widerstand 262 aus Fig. 8 gegen Masse geschaltet ist.

Fig. 32 ermöglicht es, die unteren Leistungsschalter dadurch einzuschalten, daß IN1, IN2 oder IN3 auf Null gesetzt werden. In der Schaltung aus Fig. 8 wird durch Setzen eines der Signale IN1, IN2 oder IN3 das Signal PWM2 180 über die jeweilige Diode (260) auf Masse gezogen.

Daher wird in Fig. 32 die Diode 260' verwendet, so daß die Leitung IN1 durch sie gegen Masse gezogen wird.

Dadurch ist es dem μC 23 möglich, durch das Setzen von IN1 (IN2, IN3) auf Null jeweils den unteren Leistungsschalter einzuschalten, und durch Setzen von IN1 (IN2, IN3) auf TRISTATE das PWM-Signal PWM2 180 einzuschleusen, das zu diesem Zweck in dem PWM-Generator 182' invertiert wird.

Naturgemäß sind im Rahmen der Erfindung vielfache Abwandlungen und Modifikationen möglich.

Bei einem elektronisch kommutierten Motor wird sowohl der Antriebsstrom ($i_2$) wie der Bremsstrom ($i_2'$) über-wacht. Bei zu hohem Antriebsstrom wird ein Tastverhältnis reduziert, das den Strom im Motor beeinflußt, und bei zu hohem Bremsstrom wird dieses Tastverhältnis erhöht. Hierfür wird eine analoge Schaltung mit zwei Strombegrenzungs-gliedern (131, 161) angegeben, ebenso eine Schaltung, wo diese Funktionen durch die Software eines Mikrocontrollers realisiert sind und deshalb eine Strommessung entfallen kann, oder schließlich eine Kombination beider Maßnahmen, wobei eine Hardware-Strombegrenzung und eine Software-Strombegrenzung zusammenwirken.

**Patentansprüche**

1. Verfahren zum Betreiben eines elektronisch kommutierten Motors, der einen permanentmagnetischen Rotor (110) und einen Stator (114) aufweist,

   mit einer Statorwicklungsanordnung (115, 116, 117), welche über eine Vollbrückenschaltung (78) mit Strom aus einer Gleichstromquelle (73, 74) speisbar ist,

   welche Vollbrückenschaltung (78) in jedem Brückenzweig einen oberen MOSFET-Transistor, der mit einer positiven Leitung (73) der Gleichstromquelle verbunden ist, und einen unteren Transistor, der mit einer negativen Leitung (74) der Gleichstromquelle verbunden ist, aufweist,

   mit einer Kommutierungsanordnung zum Kommutieren dieser Transistoren,

   welche Kommutierungsanordnung dazu ausgebildet ist, in Abhängigkeit zumindest von der Stellung des Rotors (110) bei einem ersten Brückenzweig nur einen Transistor einzuschalten und bei einem zweiten Brückenzweig, gesteuert durch ein PWM-Signal, den oberen und den unteren Transistor alternierend einzuschalten,

   und mit einem Mikroprozessor oder Mikrocontroller, im folgenden Mikroprozessor (23) genannt,

   mit folgenden Schritten:

   Im Mikroprozessor (23) wird anhand eines synthetischen Modells des Motors (32) und eines dem Mikroprozessor zugeführten Wertes für die Motordrehzahl (n) laufend überwacht, ob die dem Motor zugeführte Gleichspannung ($U_E$) in einer vorgegebenen Relation zu der im Motor induzierten Spannung ($U_i$) steht;

   wenn der Motor generatorisch betrieben wird, und die an ihm anliegende Gleichspannung ($U_E$) außerhalb der

**EP 1 471 628 B1**

vorgegebenen Relation liegt, wird vom Mikroprozessor (23) das Tastverhältnis des PWM-Signals entsprechend verändert, mit dem der obere und der untere Transistor des zweiten Brückenzweigs alternierend eingeschaltet werden, um durch diese Änderung den Bremsstrom ($i_2$') zu begrenzen.

2. Verfahren nach Anspruch 1, bei welchem im synthetischen Modell des Motors mindestens ein elektrischer Parameter des Motors berücksichtigt wird.

3. Verfahren nach Anspruch 1 oder 2, bei welchem bei einer Abweichung von der vorgegebenen Relation auch im motorischen Betrieb durch den Mikroprozessor (23) zur Korrektur dieser Relation das Tastverhältnis des PWM-Signals entsprechend verändert wird, mit dem der obere und der untere Transistor des zweiten Brückenzweigs alternierend eingeschaltet werden, um durch diese Änderung auch den Strom (i2) im motorischen Betrieb zu begrenzen.

4. Elektronisch kommutierter Motor, welcher aufweist:

   Einen permanentmagnetischen Rotor (110);
   einen Stator (114);
   eine am Stator vorgesehene Statorwicklungsanordnung (115, 116, 117), welche über eine Vollbrückenschaltung (78) mit Strom aus einer Gleichstromquelle (73, 74) speisbar ist,
   welche Vollbrückenschaltung (78) in jedem Brückenzweig einen oberen MOSFET-Transistor aufweist, der im Betrieb mit einer positiven Leitung (73) der Gleichstromquelle verbunden ist, und einen unteren Transistor, der mit einer negativen Leitung (74) der Gleichstromquelle verbunden ist;
   eine Kommutierungsanordnung zum Kommutieren dieser Transistoren, welche Kommutierungsanordnung dazu ausgebildet ist, in Abhängigkeit zumindest von der Stellung des Rotors (110) bei einem ersten Brückenzweig nur einen Transistor einzuschalten und bei einem zweiten Brückenzweig, gesteuert durch ein PWM-Signal, den oberen und den unteren Transistor alternierend einzuschalten;
   einen Mikroprozessor oder Mikrocontroller, im folgenden Mikroprozessor (23) genannt, welcher zur Ausführung folgender Schritte ausgebildet ist:

   Anhand eines synthetischen Modells des Motors (32) und eines Wertes für die Motordrehzahl (n) wird laufend überwacht, ob die dem Motor (32) zugeführte Gleichspannung ($U_E$) in einer vorgegebenen Relation zu der im rotierenden Motor induzierten Spannung ($U_i$) steht;
   wenn der Motor generatorisch betrieben wird, und die an ihm anliegende Gleichspannung ($U_E$) außerhalb der vorgegebenen Relation liegt, wird das Tastverhältnis des PWM-Signals entsprechend verändert, mit dem der obere und der untere Transistor des zweiten Brückenzweigs alternierend eingeschaltet werden, um durch diese Änderung den Bremsstrom (i2') zu begrenzen.

5. Motor nach Anspruch 4, bei welchem das synthetische Modell des Motors (32) mindestens einen elektrischen Parameter dieses Motors berücksichtigt.

6. Motor nach Anspruch 4 oder 5, bei welchem der Mikroprozessor (23) dazu ausgebildet ist, bei einer Abweichung von der vorgegebenen Relation auch im motorischen Betrieb zur Korrektur dieser Relation das Tastverhältnis des PWM-Signals entsprechend zu verändern, mit dem der obere und der untere Transistor des zweiten Brückenzweigs alternierend eingeschaltet werden, um durch diese Änderung auch den Strom (i2) im motorischen Betrieb zu begrenzen.

7. Elektronisch kommutierter Motor mit einem Rotor (110) und mit einem Stator (114), auf dem eine Statorwicklungsanordnung (115, 116, 117) angeordnet ist, der eine Vollbrückenschaltung (78) mit einer Mehrzahl von parallelen Brückenzweigen zugeordnet ist, von denen jeder einen oberen Transistor (80), der mit einer positiven Leitung (73) einer Gleichstromquelle verbunden ist, und einen unteren Transistor (81), der mit einer negativen Leitung (74) der Gleichspannungsquelle verbunden ist, aufweist,
   wobei den beiden Transistoren (80, 81) eines Brückenzweigs jeweils eine Ansteuerschaltung (50, 52, 54) zugeordnet ist, welche abhängig von einem ersten Eingangssignal (EN1) aktivierbar und deaktivierbar ist und im deaktivierten Zustand beide Transistoren (80, 81) des zugeordneten Brückenzweigs sperrt,
   und welche abhängig von einem zweiten Eingangssignal (IN1) im durch das erste Eingangssignal (EN1) aktivierten Zustand so umschaltbar ist, daß entweder der obere Transistor (80) oder der untere Transistor (81) leitend gesteuert wird,
   ferner mit einem Mikroprozessor oder Mikrocontroller, im folgenden Mikroprozessor (23) genannt, zum Erzeugen

22

**EP 1 471 628 B1**

des ersten Eingangssignals an einem ersten Ausgang (EN1) und zum Erzeugen des zweiten Eingangssignals an einem zweiten Ausgang (IN1),

und mit einem dritten Eingangssignal (80) in Form eines PWM-Signals mit einem steuerbaren Tastverhältnis (PWM; PWM2), welches dritte Eingangssignal der Ansteuerschaltung (50) parallel zum zweiten Eingangssignal (IN1) von einer PWM-Signalquelle (182) zuführbar ist und nur wirksam wird, wenn der zweite Ausgang (IN1) des Mikroprozessors (23) in einen vorgegebenen Schaltzustand umgeschaltet ist.

8. Motor nach Anspruch 7, bei welchem der vorgegebene Schaltzustand des zweiten Ausgangs (IN1) des Mikroprozessors (23) ein hochohmiger Zustand (TRISTATE) ist.

9. Motor nach Anspruch 7 oder 8, bei welchem das dritte Eingangssignal (180) der-Ansteuerschaltung (50, 52, 54) über eine Diode (260) zuführbar ist.

10. Motor nach einem oder mehreren der Ansprüche 7 bis 9, bei welchem die Amplitude des dritten Eingangssignals (180) begrenzt ist, insbesondere durch eine Zenerdiode (186).

11. Motor nach einem oder mehreren der Ansprüche 7 bis 10, bei welchem die Ansteuerschaltung einen Eingang (223) aufweist, an den ein Widerstand (252) angeschlossen ist, dessen Größe die Größe einer Totzeit (Δ t) beim Umschalten zwischen den Transistoren (80, 81) des zugeordneten Brückenzweigs beeinflußt,

und dieser Widerstand (252) durch ein steuerbares Schaltglied (250) mindestens teilweise überbrückbar ist, welches durch das erste Eingangssignal (EN1) steuerbar ist.

12. Motor nach Anspruch 11, bei welchem das steuerbare Schaltglied (250) in einen vorgegebenen Schaltzustand gesteuert wird, wenn der erste Ausgang (EN1) des Mikroprozessors (23) einen hochohmigen Zustand annimmt, um hierbei den zugeordneten Brückenzweig (80, 81) zu sperren.

13. Motor nach einem oder mehreren der Ansprüche 7 bis 12, bei welchem das Tastverhältnis (PWM2) der PWM-Signalquelle (182) durch die Spannung an einem Kondensator (148) steuerbar ist, welche Spannung beim Fließen eines zu hohen Antriebsstroms in der Statorwicklungsanordnung durch eine erste Strombegrenzungsanordnung (131) in einer vorgegebenen Richtung veränderbar ist, damit dieser Antriebsstrom durch eine entsprechende Veränderung des Tastverhältnisses (PWM2) abgesenkt wird,

und welche beim Fließen eines zu hohem Bremsstromes in der Statorwicklungsanordnung durch eine zweite Strombegrenzungsanordnung (161) in einer zur vorgegebenen Richtung entgegengesetzten Richtung veränderbar ist, um den Bremsstrom durch eine entsprechende Änderung des Tastverhältnisses (PWM2) abzusenken.

14. Motor nach Anspruch 13, bei welchem eine Begrenzungsvorrichtung für das Tastverhältnis (PWM2) vorgesehen ist, um zu verhindern, daß bei einem Extremwert des Tastverhältnisses (PWM2) der untere Transistor (81) eines Brückenzweigs ständig geöffnet und der obere Transistor (80) ständig geschlossen ist.

15. Motor nach einem oder mehreren der Ansprüche 7 bis 14, welcher mindestens dreiphasig ausgebildet ist, und mindestens drei Ansteuerschaltungen (50, 52, 54) für die Brückenzweige (21, 22, 23) aufweist, und mit einer Anordung (Fig. 29), welche bei einer Kommutierung eine Unterbrechung des ersten Eingangssignals (EN1) einer Ansteuerschaltung verhindert, wenn diese Ansteuerschaltung vor und nach der Kommutierung aktiviert sein muß.

## Claims

1. Method for operating an electronically commutated motor which comprises a permanent-magnet rotor (110) and a stator (114);

with a stator winding arrangement (115, 116, 117) which can be supplied via a full bridge circuit (78) with current from a direct current source (73, 74), which full bridge circuit (78) has, in each bridge arm, an upper MOSFET transistor which is connected to a positive line (73) of the direct current source and a lower transistor which is connected to a negative line (74) of the direct current source;

with a commutation arrangement for commutating said transistors,

which commutation arrangement is configured, as a function at least of the position of the rotor (110) in a first bridge arm, to switch on only one transistor and, in a second bridge arm controlled by a PWM signal, to switch on the upper and the lower transistors alternately;

and with a microprocessor or microcontroller, hereinafter referred to as a microprocessor (23), comprising the following steps:

in the microprocessor (23), based on a synthetic model of the motor (32) and a value for the motor speed (n) supplied to the microprocessor, it is continuously monitored whether the direct current voltage ($U_E$) supplied to the motor is in a predefined relationship to the voltage ($U_i$) induced in the motor;

if the motor is operated in generator mode and the direct current voltage ($U_E$) applied thereto lies outside the predefined relationship, the pulse duty factor of the PWM signal, with which the upper and the lower transistors of the second bridge arm are alternately switched on, is accordingly modified by the microprocessor (23)in order to limit the braking current (i2') by means of said modification.

2. Method according to Claim 1, in which at least one electrical parameter of the motor is taken into account in the synthetic model of the motor.

3. Method according to Claim 1 or 2, in which in the case of a deviation from the predefined relationship and additionally in motorised operation, the pulse duty factor of the PWM signal is accordingly modified by the microprocessor (23) for correcting this relationship, and by which the upper and the lower transistors of the second bridge arm are alternately switched on in order to limit the current (i2) in motorised operation by means of this modification.

4. Electronically commutated motor which comprises:

a permanent-magnet rotor (110);
and a stator (114);
a stator winding arrangement (115, 116, 117) provided on the stator and which is supplied via a full bridge circuit (78) with current from a direct current source (73, 74),
which full bridge circuit (78) has, in each bridge arm, an upper MOSFET transistor which is connected during operation to a positive line (73) of the direct current source and a lower transistor which is connected to a negative line (74) of the direct current source;
a commutation arrangement for commutating said transistors, which commutation arrangement is configured, as a function of at least the position of the rotor (110) in a first bridge arm, to switch on only one transistor and, in a second bridge arm controlled by a PWM signal, to switch on the upper and
the lower transistors alternately;
a microprocessor or microcontroller, hereinafter referred to as a microprocessor (23), which is configured to carry out the following steps:

based on a synthetic model of the motor (32) and a value for the motor speed (n), it is continuously monitored whether the direct current voltage ($U_E$) supplied to the motor (32) is in a predefined relationship to the voltage (Ui) induced in the rotating motor;
if the motor is operated in generator mode and the direct-current voltage ($U_E$) applied thereto lies outside the predefined relationship, the pulse duty factor of the PWM signal, with which the upper and the lower transistors of the second bridge arm are alternately switched on, is accordingly modified in order to limit the braking current (i2') by means of said modification.

5. Motor according to Claim 4, in which the synthetic model of the motor (32) takes account of at least one electrical parameter of said motor.

6. Motor according to Claim 4 or 5, in which in the case of a deviation from the predefined relationship and additionally in motorised operation, the microprocessor (23) is configured to modify accordingly the pulse duty factor of the PWM signal for correcting this relationship, and by which the upper and the lower transistors of the second bridge arm are alternately switched on in order to limit the current (i2) in motorised operation by means of this modification.

7. Electronically commutated motor comprising a rotor (110) and comprising a stator (114) on which a stator winding arrangement (115, 116, 117) is arranged, with which a full bridge circuit (78) having a plurality of parallel bridge arms is associated, each of which has an upper transistor (80) which is connected to a positive line (73) of a direct-current source and a lower transistor (81) which is connected to a negative line (74) of the direct-current source,
a control circuit (50, 52, 54) being associated in each case with the two transistors (80, 81) of a bridge arm, said control circuit being able to be activated and deactivated as a function of a first input signal (EN1) and, in the deactivated state, blocks both transistors (80, 81) of the associated bridge arm,
and which, as a function of a second input signal (IN1) in the state activated by the first input signal (EN1) can be switched over such that either the upper transistor (80) or the lower transistor (81) is controlled conductively, further comprising a microprocessor or microcontroller, hereinafter referred to as a microprocessor (23) for generating the first input signal at a first output (EN1) and for generating the second input signal at a second output (IN1); and comprising a third input signal (80) in the form of a PWM signal with a controllable pulse duty factor (PWM; PWM2), which third input signal is able to be supplied to the control circuit (50) in parallel with the second input signal (IN1) of a PWM signal source (182) and is effective only if the second output (IN1) of the microprocessor (23) is switched over into a predefined switching state.

8.  Motor according to Claim 7, in which the predefined switching state of the second output (IN1) of the microprocessor (23) is a high-resistance state (TRISTATE).

9.  Motor according to Claim 7 or 8, in which the third input signal (180) may be supplied to the control circuit (50, 52, 54) via a diode (260).

10. Motor according to one or more of Claims 7 to 9, in which the amplitude of the third input signal (180) is limited, in particular by a Zener diode (186).

11. Motor according to one or more of Claims 7 to 10, in which the control circuit has an input (223) to which a resistor (252) is connected, the magnitude thereof influencing the magnitude of a dead time ($\Delta$ t) when switching over between the transistors (80, 81) of the associated bridge arm; and said resistor (252) being able to be at least partially bypassed by a controllable switching member (250) which is controllable by means of the first input signal (EN1).

12. Motor according to Claim 11, in which the controllable switching member (250) is controlled in a predefined switching state when the first output (EN1) of the microprocessor (23) adopts a high-resistance state, in order thereby to block the associated bridge arm (80, 81).

13. Motor according to one or more of Claims 7 to 12, in which the pulse duty factor (PWM2) of the PWM signal source (182) may be controlled by means of the voltage at a capacitor (148), which voltage may be modified by a first current limiting arrangement (131) in a predefined direction when too high a driving current flows in the stator winding arrangement, so that said driving current is lowered by a corresponding modification of the pulse duty factor (PWM2), and which may be modified by a second current limiting arrangement (161) in a direction opposing the predefined direction when too high a braking current flows in the stator winding arrangement, in order to lower the braking current by a corresponding modification of the pulse duty factor (PWM2).

14. Motor according to Claim 13, in which a limiting device is provided for the pulse duty factor (PWM2) in order to prevent the lower transistor (81) of a bridge arm from being continuously open and to prevent the upper transistor (80) from being continuously closed, in the case of an extreme value of the pulse duty factor (PWM2).

15. Motor according to one or more of Claims 7 to 14, which is of three-phase configuration and comprises at least three control circuits (50, 52, 54) for the bridge arms (21, 22, 23) and with an arrangement (Fig. 29) which, during a commutation, prevents an interruption of the first input signal (EN1) of a control circuit when said control circuit has to be activated before and after the commutation.

**Revendications**

1.  Procédé pour faire fonctionner un moteur à commutation électronique, lequel présente un rotor à aimant permanent (110) et un stator (114),
    avec un arrangement d'enroulements statoriques (115, 116, 117), lequel peut être alimenté en courant depuis une source de courant continu (73, 74) via un circuit en pont intégral (78),
    lequel circuit en pont intégral (78) présente dans chaque branche de pont un transistor MOSFET supérieur, qui est relié à une ligne positive (73) de la source de courant continu, et un transistor inférieur qui est relié à une ligne négative (74) de la source de courant continu,
    avec un arrangement de commutation pour commuter ces transistors,
    lequel arrangement de commutation est conçu pour activer, en fonction au moins de la position du rotor (110), dans une première branche de pont seulement un transistor et dans une deuxième branche de pont, sous la commande d'un signal PWM, alternativement les transistors supérieur et inférieur,

et avec un microprocesseur ou microcontrôleur, appelé dans la suite microprocesseur (23),
comprenant les étapes suivantes :

dans le microprocesseur (23), il est surveillé en permanence à l'aide d'un modèle synthétique du moteur (32) et d'une valeur de la vitesse de rotation du moteur (n) amenée au microprocesseur si la tension continue ($U_E$) amenée au moteur est dans une relation prédéfinie avec la tension induite ($U_i$) dans le moteur ;

si le moteur fonctionne en mode générateur et que la tension continue ($U_E$) qui lui est appliquée se situe en dehors de la relation prédéfinie, le microprocesseur (23) modifie en conséquence le rapport cyclique du signal PWM avec lequel les transistors supérieur et inférieur de la deuxième branche de pont sont activés alternativement afin de limiter par cette modification le courant de freinage (i2').

2. Procédé selon la revendication 1, dans lequel au moins un paramètre électrique du moteur est pris en compte dans le modèle synthétique du moteur.

3. Procédé selon la revendication 1 ou 2, dans lequel, en cas d'écart de la relation prédéfinie aussi en mode moteur, le rapport cyclique du signal PWM avec lequel les transistors supérieur et inférieur de la deuxième branche de pont sont activés alternativement est modifié en conséquence par le microprocesseur (23) pour corriger cette relation afin de limiter par cette modification aussi le courant (i2) en mode moteur.

4. Moteur à commutation électronique, lequel présente :

un rotor à aimant permanent (110) ;
un stator (114) ;
un arrangement d'enroulements statoriques (115, 116, 117) prévu sur le stator, lequel peut être alimenté en courant depuis une source de courant continu (73, 74) via un circuit en pont intégral (78),
lequel circuit en pont intégral (78) présente dans chaque branche de pont un transistor MOSFET supérieur, qui est relié en fonctionnement à une ligne positive (73) de la source de courant continu, et un transistor inférieur qui est relié à une ligne négative (74) de la source de courant continu ;
un arrangement de commutation pour commuter ces transistors, lequel arrangement de commutation est conçu pour activer, en fonction au moins de la position du rotor (110), dans une première branche de pont seulement un transistor et dans une deuxième branche de pont, sous la commande d'un signal PWM, alternativement les transistors supérieur et inférieur,
un microprocesseur ou microcontrôleur, appelé dans la suite microprocesseur (23), lequel est conçu pour exécuter les étapes suivantes :

à l'aide d'un modèle synthétique du moteur (32) et d'une valeur de la vitesse de rotation du moteur (n), il est surveillé en permanence si la tension continue ($U_E$) amenée au moteur (32) est dans une relation prédéfinie avec la tension ($U_i$) induite dans le moteur en rotation ;
si le moteur fonctionne en mode générateur et que la tension continue ($U_E$) qui lui est appliquée se situe en dehors de la relation prédéfinie, le rapport cyclique du signal PWM avec lequel les transistors supérieur et inférieur de la deuxième branche de pont sont activés alternativement est modifié en conséquence afin de limiter par cette modification le courant de freinage (i2').

5. Moteur selon la revendication 4, dans lequel le modèle synthétique du moteur (32) prend en compte au moins un paramètre électrique de ce moteur.

6. Moteur selon la revendication 4 ou 5, dans lequel le microprocesseur (23) est conçu pour, en cas d'écart de la relation prédéfinie aussi en mode moteur, modifier en conséquence le rapport cyclique du signal PWM avec lequel les transistors supérieur et inférieur de la deuxième branche de pont sont activés alternativement pour corriger cette relation afin de limiter par cette modification aussi le courant (i2) en mode moteur.

7. Moteur à commutation électronique avec un rotor (110) et avec un stator (114) sur lequel est disposé un arrangement d'enroulements statoriques (115, 116, 117) auquel est associé un circuit en pont intégral (78) avec une pluralité de branches de pont parallèles dont chacune présente un transistor supérieur (80) qui est relié à une ligne positive (73) d'une source de courant continu et un transistor inférieur (81) qui est relié à une ligne négative (74) de la source de tension continue,
dans lequel un circuit de commande (50, 52, 54) est associé aux deux transistors (80, 81) de chaque branche de pont, lequel peut être activé et désactivé en fonction d'un premier signal d'entrée (EN1) et, dans l'état désactivé, bloque les deux transistors (80, 81) de la branche de pont associée,

et lequel, en fonction d'un deuxième signal d'entrée (IN1), peut, dans l'état activé par le premier signal d'entrée (EN1), être commuté de façon à rendre conducteur soit le transistor supérieur (80), soit le transistor inférieur (81), ainsi qu'avec un microprocesseur ou microcontrôleur, appelé dans la suite microprocesseur (23), pour générer le premier signal d'entrée à une première sortie (EN1) et pour générer le deuxième signal d'entrée à une deuxième sortie (IN1),

et avec un troisième signal d'entrée (80) sous la forme d'un signal PWM avec un rapport cyclique commandable (PWM ; PWM2), lequel troisième signal d'entrée peut être amené au circuit de commande (50) par une source de signaux PWM (182) parallèlement au deuxième signal d'entrée (IN1) et ne devient actif que lorsque la deuxième sortie (IN1) du microprocesseur (23) est commutée dans un état logique prédéfini.

8. Moteur selon la revendication 7, dans lequel l'état logique prédéfini de la deuxième sortie (IN1) du microprocesseur (23) est un état à haute impédance (TRISTATE).

9. Moteur selon la revendication 7 ou 8, dans lequel le troisième signal d'entrée (180) du circuit de commande (50, 52, 54) peut être amené via une diode (260).

10. Moteur selon une ou plusieurs des revendications 7 à 9, dans lequel l'amplitude du troisième signal d'entrée (180) est limitée, en particulier par une diode Zener (186).

11. Moteur selon une ou plusieurs des revendications 7 à 10, dans lequel le circuit de commande présente une entrée (223) à laquelle est connectée une résistance (252) dont la valeur influence la valeur d'un temps mort ($\Delta t$) lors de la commutation entre les transistors (80, 81) de la branche de pont associée,

et cette résistance (252) peut être pontée au moins partiellement par un élément logique commandable (250), lequel peut être commandé par le premier signal d'entrée (EN1).

12. Moteur selon la revendication 11, dans lequel l'élément logique commandable (250) est commandé dans un état logique prédéfini quand la première sortie (EN1) du microprocesseur (23) prend un état à haute impédance afin de bloquer à cette occasion la branche de pont (80, 81) associée.

13. Moteur selon une ou plusieurs des revendications 7 à 12, dans lequel le rapport cyclique (PWM2) de la source de signaux PWM (182) peut être commandé par la tension présente à un condensateur (148), laquelle tension peut, en cas de circulation d'un courant d'entraînement trop élevé dans l'arrangement d'enroulements statoriques, être modifiée dans un sens prédéfini par un premier arrangement de limitation de courant (131) afin d'abaisser ce courant d'entraînement par une modification correspondante du rapport cyclique (PWM2), et laquelle peut, en cas de circulation d'un courant de freinage trop élevé dans l'arrangement d'enroulements statoriques, être modifiée dans un sens opposé au sens prédéfini par un deuxième arrangement de limitation de courant (161) afin d'abaisser le courant de freinage par une modification correspondante du rapport cyclique (PWM2).

14. Moteur selon la revendication 13, dans lequel il est prévu un dispositif de limitation pour le rapport cyclique (PWM2) afin d'empêcher qu'en cas de valeur extrême du rapport cyclique (PWM2) le transistor inférieur (81) d'une branche de pont soit constamment ouvert et le transistor supérieur (80) constamment fermé.

15. Moteur selon une ou plusieurs des revendications 7 à 14, lequel est conçu au moins avec trois phases et présente au moins trois circuits de commande (50, 52, 54) pour les branches de pont (21, 22, 23), et avec un arrangement (fig. 29) qui, lors d'une commutation, empêche une interruption du premier signal d'entrée (EN1) d'un circuit de commande si ce circuit de commande doit être activé avant et après la commutation.

Fig.1

EP 1 471 628 B1

28

Fig.2

| phi$_{el}$ | 700 | | | 702 | | | 704 | | | EN | | | IN | | |
|---|---|---|---|---|---|---|---|---|---|---|---|---|---|---|---|
| | HS1 | HS2 | HS3 | 81 | 83 | 85 | 80 | 82 | 84 | EN1 | EN2 | EN3 | IN1 | IN2 | IN3 |
| 0°...60° | 1 | 0 | 1 | 0 | 1 | 0 | 1 | 0 | 0 | 0 | 0 | 1 | 1 | TRI | 1 |
| 60°...120° | 1 | 0 | 0 | 0 | 0 | 1 | 1 | 0 | 0 | 0 | 1 | 0 | 1 | 1 | TRI |
| 120°...180° | 1 | 1 | 0 | 0 | 0 | 1 | 0 | 1 | 0 | 1 | 0 | 0 | 1 | 1 | TRI |
| 180°...240° | 0 | 1 | 0 | 1 | 0 | 0 | 0 | 1 | 0 | 0 | 0 | 1 | TRI | 1 | 1 |
| 240°...300° | 0 | 1 | 1 | 1 | 0 | 0 | 0 | 0 | 1 | 0 | 1 | 0 | TRI | 1 | 1 |
| 300°...360° | 0 | 0 | 1 | 0 | 1 | 0 | 0 | 0 | 1 | 1 | 0 | 0 | 1 | TRI | 1 |

706

708

740

EP 1 471 628 B1

Fig. 3

Fig. 4A

Fig. 4B

Fig. 4C

Fig. 4D

Fig. 4E

Fig. 4F

Fig. 4

Fig.5

EP 1 471 628 B1

Fig.6

Fig.7

Fig.8

Fig.9

EP 1 471 628 B1

PWM2

198

156'

199

0                                                                    t

Fig. 10A

PWM2

$t_{ON}$

T

HIGH

180

LOW                                                                  t

Fig. 10B

Fig. 10

EP 1 471 628 B1

37

Fig. 11

EP 1 471 628 B1

Fig.12A

Fig.12B

Fig.12C

Fig.12D

Fig. 12

HS1

HS2

HS3

$(\overline{HS1+HS2+HS3})$

HS

265

t_HALL

HS

0   60   120   180   240   300   0   60

°el

°el

°el

°el

EP 1 471 628 B1

```
                    ┌─────────┐
                    │  START  │
                    └─────────┘
                         │
                         ▼
        ┌──────────────────────────────────┐        S200
        │                                   │
        │          . . .                    │
        │       CALC CNT_HL                 │
        │          . . .                    │
        │                                   │
        └──────────────────────────────────┘
                         │
                         ▼
            ┌────────────────────┐     S201
            │  FCT_UBT := 1      │
            └────────────────────┘
                         │
                         ▼
          ┌──────────────────────────┐    S202
          │  CNT_P := CNT_P - 1       │
          └──────────────────────────┘
                         │          S204
                         ▼
                  ╱──────────────╲
                 ╱  CNT_P > 0?    ╲────── N ──────┐
                 ╲                ╱                │
                  ╲──────────────╱                ▼           S206
                         │              ┌────────────────────┐
                         │              │  FCT_PUMP := 1     │
                         │              └────────────────────┘
                         │                        │
                         │         ┌──────────────┘
                         ▼         ▼
                    ┌─────────┐  S210
                    │  RETI   │
                    └─────────┘
```

# Fig. 13

HS

265

267    267    267    267

*Fig. 14A*

CNT_P

CNT_P_MAX

266

*Fig. 14B*

267'

0

*Fig. 14*

EP 1 471 628 B1

Fig. 15

EP 1 471 628 B1

RGLDIFF := n_s - n                                              S100

TEMP1 := RGLDIFF_O * RGL_I / 256                               S102

TEMP2 := TEMP1 + RGLDIFF
VZ_TEMP2 := SIGN(TEMP2)
TEMP3 := ABS(TEMP2) * RGL_VERST                                S104

OVERFLOW(TEMP3)?                              S106        Y

VZ_TEMP2 = 1?          S107

N                                                    Y

TEMP3 := 0        S108            TEMP3 :=
                                  TEMP3_MAX

                  S109

N

SW := TEMP3 + SW
(OVERFLOW: SW := SW_ABS_MAX)                                   S110
(UNDERFLOW: SW := SW_ABS_MIN)

RGLDIFF_O := (-1) * RGLDIFF                                    S112

                                                              282

CALC SW_MIN, SW_MAX                                           S114
SW_MIN' := SW_MIN + OFFSET1
SW_MAX' := SW_MAX + OFFSET1

SW < SW_MIN'          S116        Y        SW := SW_MIN'       S118

N

SW > SW_MAX'          S120        Y        SW := SW_MAX'       S122

N

PWMGEN1 := SW
|xxxxxxxx|xx000000|                                           S124
   HI        LO

# Fig. 16

290 +

$i_3$

$U_E = U_B \cdot \dfrac{t_{ON}}{T}$

290 −

122 M

$U_i = n \cdot k_E$

$Ri$

121

$L$

120

$U_{Ri}$

**Fig.17**

PWM2

$t_{ON}$

$T$

180

$t$

**Fig. 18**

44

Fig. 19

EP 1 471 628 B1

$$SW\_MIN := (n * k_e - I_{max} * R_i) * U_{Nenn} / U_B$$
$$SW\_MAX := (n * k_e + I_{max} * R_i) * U_{Nenn} / U_B$$

$$SW\_MIN' := SW\_MIN + OFFSET\ 1$$
$$SW\_MAX' := SW\_MAX + OFFSET\ 1$$

Fig. 20

EP 1 471 628 B1

Fig. 21

Fig. 22

$$SW\_MIN := (1/2 * n/n\_max) * U_{Nenn} / U_B$$
$$SW\_MIN' := SW\_MIN + OFFSET1$$

S114''

S112

S116

$SW < SW\_MIN'$

Y

$SW := SW\_MIN'$

S118

N

S124

282'

U

$U_{E,max}$

$U_{max}$

$U_i$

$U_{E,min}$

294

122

296

298

$U_{max}/2$

295

$n\_max$

n

```
              ┌─────────┐
              │ UB_TEST │
              └────┬────┘
                   │
        ┌──────────▼──────────┐  S302
        │   FCT_UBT := 0      │
        └──────────┬──────────┘
                   │
        ┌──────────▼──────────┐  S304
        │  U_AD := AD_VAL2    │
        └──────────┬──────────┘
                   │
              S306 ▼
        ◇─────────────────────◇──── Y ──────────┐
        ◇  U_AD < U_MIN_OFF?  ◇                  │
        ◇─────────────────────◇                  │
                 │ N                              ▼  S310
            S308 ▼                      ◇─────────────────◇──── Y ────┐
        ◇─────────────────────◇── Y ──►◇   U_OFF = 1?    ◇            │
        ◇  U_AD > U_MAX_OFF?  ◇        ◇─────────────────◇            │
        ◇─────────────────────◇                 │ N                    │
                 │ N                             ▼  S312               │
                 │                    ┌────────────────────┐           │
                 │                    │    U_OFF := 1      │           │
                 │                    │                    │           │
                 │                    │    EN1 := 1        ├───────────┤
                 │                    │    EN2 := 1        │           │
                 │                    │    EN3 := 1        │           │
                 │                    └────────────────────┘           │
            S320 ▼                                                      │
        ◇─────────────────────◇                                        │
        ◇  U_AD < U_MAX_ON?   ◇── Y ──┐                                │
        ◇─────────────────────◇       │                                │
                 │ N                   ▼  S324                          │
            S322 ▼          ◇─────────────────◇──── Y ────────────────┤
        ◇─────────────────────◇  Y   ◇   U_OFF = 0?    ◇              │
        ◇  U_AD < U_MIN_ON?   ◇─────►◇─────────────────◇              │
        ◇─────────────────────◇              │ N                       │
                 │                            ▼  S326                   │
                 │                 ┌────────────────────┐              │
                 │                 │   U_OFF := 0       ├──────────────┤
                 │                 │   COMMUT           │              │
                 │                 └────────────────────┘              │
                 │          ┌──────────────────────────────────────────┘
                 ▼          ▼
              ╭──────────╮  S330
              │   RET    │
              ╰──────────╯
```

Fig. 23

Fig. 24

48

Fig. 25

| Bit8 | Bit7 | Bit6 | Bit5 | Bit4 | Bit3 | Bit2 | Bit1 |
|------|------|------|------|------|------|------|------|
| X | X | FCT_UBT | FCT_PUMP | FCT_HL | FCT_n | FCT_RGL | FCT_n_s |

605

MSB                                                                          LSB

## Fig. 26

EP 1 471 628 B1

**Fig. 27**

EP 1 471 628 B1

S114′′′

$$SW\_MIN := m\_min * n + c\_min$$
$$SW\_MAX := m\_max * n + c\_max$$

$$SW\_MIN' := SW\_MIN + OFFSET\ 1$$
$$SW\_MAX' := SW\_MAX + OFFSET\ 1$$

**Fig. 28**

Fig. 29

Fig. 30

EP 1 471 628 B1

Fig. 31

EP 1 471 628 B1

Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3629186
- EP 0521709 B1
- US 5773941 A
- JP 6014583 A
- DE 19836882
- DE 19826458
- DE 19700479 A1